# EUROPEAN PATENT APPLICATION

(11) **EP 4 412 351 A1**
(43) Date of publication of application: **07.08.2024**
(21) Application number: 22872239.3
(22) Date of filing: 27.09.2022
(51) Int. Cl.: H04W 72/04

(54) **AUXILIARY INFORMATION REPORT METHOD, SERVICE CONFIGURATION METHOD, TERMINAL, AND NETWORK DEVICE**

(30) Priority: 27.09.2021 CN 202111138571
(71) Applicant: Vivo Mobile Communication Co., Ltd., Dongguan, Guangdong 523863 (CN)
(72) Inventor: JIANG, Wei, Dongguan, Guangdong 523863 (CN); SUN, Xiaodong, Dongguan, Guangdong 523863 (CN); CHEN, Xiaohang, Dongguan, Guangdong 523863 (CN); LI, Dongru, Dongguan, Guangdong 523863 (CN)
(74) Representative: Lavoix
(86) International application number: PCT/CN2022/121681
(87) International publication number: WO 2023/046196

(57) **Abstract**

This application discloses an assistance information reporting method, a service configuration method, a terminal, and a network side device, and belongs to the field of communication technologies. The assistance information reporting method in embodiments of this application includes: A terminal sends assistance information for target data to a network side device. The terminal receives configuration information of the target data from the network side device.

## Description

### CROSS-REFERENCE TO RELATED APPLICATIONS

This application claims priority to Chinese Patent Application No. 202111138571.8, filed in China on September 27, 2021, which is incorporated herein by reference in its entirety.

### TECHNICAL FIELD

This application belongs to the field of communication technologies, and in particular, relates to an assistance information reporting method, a service configuration method, a terminal, and a network side device.

### BACKGROUND

Extended reality (extended reality, XR) refers to all reality and virtuality combined environments and human-computer interactions generated by a computer technology and a wearable device. Extended reality includes representative forms such as augmented reality (Augmented Reality, AR), mixed reality (Mixed Reality, MR), and virtual reality (Virtual Reality, VR), and interpolation regions therebetween.

During application, an XR service has a huge data amount and a high reliability requirement, which confronts air-interface-based data transmission with a great challenge. How to efficiently transmit XR service data through limited air interface resources to better meet a service requirement and improve a throughput is a problem that needs to be solved and continuously optimized.

### SUMMARY

Embodiments of this application provide an assistance information reporting method, a service configuration method, a terminal, and a network side device, to efficiently transmit XR service data through limited air interface resources to better meet a service requirement and improve a throughput.

According to a first aspect, an assistance information reporting method is provided. The method includes:
a terminal sends assistance information for target data to a network side device; and
the terminal receives configuration information of the target data from the network side device.

According to a second aspect, an assistance information reporting apparatus is provided, including:
a first sending module, configured to send assistance information for target data to a network side device; and
a first receiving module, configured to receive configuration information of the target data from the network side device.

According to a third aspect, a service configuration method is provided. The method includes:
a network side device receives assistance information for target data from a terminal;
the network side device determines configuration information of the target data based on the assistance information; and
the network side device sends the configuration information of the target data to the terminal.

According to a fourth aspect, a service configuration apparatus is provided, including:
a third receiving module, configured to receive assistance information for target data from a terminal;
a determining module, configured to determine configuration information of the target data based on the assistance information; and
a third sending module, configured to send the configuration information of the target data to the terminal.

According to a fifth aspect, a terminal is provided. The terminal includes a processor, a memory, and a program or instructions stored in the memory and executable on the processor. When the program or instructions are executed by the processor, the steps of the method according to the first aspect are implemented.

According to a sixth aspect, a terminal is provided, including a processor and a communication interface. The communication interface is configured to: send assistance information for target data to a network side device, and receive configuration information of the target data from the network side device.

According to a seventh aspect, a network side device is provided. The network side device includes a processor, a memory, and a program or instructions stored in the memory and executable on the processor. When the program or instructions are executed by the processor, the steps of the method according to the third aspect are implemented.

According to an eighth aspect, a network side device is provided, including a processor and a communication interface. The communication interface is configured to receive assistance information for target data from a terminal. The processor is configured to determine configuration information of the target data based on the assistance information. The communication interface is further configured to send the configuration information of the target data to the terminal.

According to a ninth aspect, a readable storage medium is provided. The readable storage medium stores a program or instructions. When the program or instructions are executed by a processor, the steps of the method according to the first aspect or the steps of the method according to the third aspect are implemented.

According to a tenth aspect, a chip is provided. The chip includes a processor and a communication interface. The communication interface is coupled to the processor. The processor is configured to run a program or instructions to implement the method according to the first aspect or the method according to the third aspect.

According to an eleventh aspect, a computer program/program product is provided. The computer program/program product is stored in a storage medium. The computer program/program product is executed by at least one processor to implement the steps of the method according to the first aspect or the steps of the method according to the third aspect.

According to a twelfth aspect, a communication device is provided, configured to perform the steps of the method according to the first aspect or the steps of the method according to the third aspect.

In embodiments of this application, the terminal sends the assistance information for the target data to the network side device, and receives the configuration information of the target data from the network side device. In this way, the network side device can match the configuration information configured for the target data with the assistance information reported by the terminal, so that the target data can be more efficiently transmitted through limited air interface resources.

### BRIEF DESCRIPTION OF THE DRAWINGS

FIG. 1 is a block diagram of a wireless communication system to which an embodiment of this application may be applied;
FIG. 2 is a flowchart of an assistance information reporting method according to an embodiment of this application;
FIG. 3 is a flowchart of a service configuration method according to an embodiment of this application;
FIG. 4 is a schematic diagram of a structure of an assistance information reporting apparatus according to an embodiment of this application;
FIG. 5 is a schematic diagram of a structure of another service configuration apparatus according to an embodiment of this application;
FIG. 6 is a schematic diagram of a structure of a communication device according to an embodiment of this application;
FIG. 7 is a schematic diagram of a structure of a terminal according to an embodiment of this application; and
FIG. 8 is a schematic diagram of a structure of a network side device according to an embodiment of this application.

### DETAILED DESCRIPTION

The following clearly describes the technical solutions in embodiments of this application with reference to the accompanying drawings in embodiments of this application. It is clear that the described embodiments are some but not all the embodiments of this application. All other embodiments obtained by a person of ordinary skill in the art based on embodiments of this application shall fall within the protection scope of this application.

The terms "first", "second", and the like in the specification and claims of this application are used to distinguish between similar objects instead of describing a specific order or sequence. It should be understood that the terms used in such a way are interchangeable in appropriate circumstances, so that embodiments of this application can be implemented in other orders than the order illustrated or described herein. Moreover, the objects distinguished by "first" and "second" are usually of one type, and the number of objects is not limited. For example, there may be one or more than one first object. In addition, "and/or" in the specification and the claims represents at least one of connected objects, and the character "/" generally indicates that associated objects have an "or" relationship.

It is worth noting that a technology described in embodiments of this application is not limited to long term evolution (Long Term Evolution, LTE)/LTE-advanced (LTE-Advanced, LTE-A) systems, and may also be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in embodiments of this application are usually used interchangeably, and the described technology may be applied not only to the systems and radio technologies mentioned above, but also to other systems and radio technologies. In the following descriptions, a new radio (New Radio, NR) system is described for example purposes, and NR terms are used in most of the following descriptions. However, these technologies may also be applied to other applications than the NR system application, for example, 6^{th} generation (6^{th} Generation, 6G) communication systems.

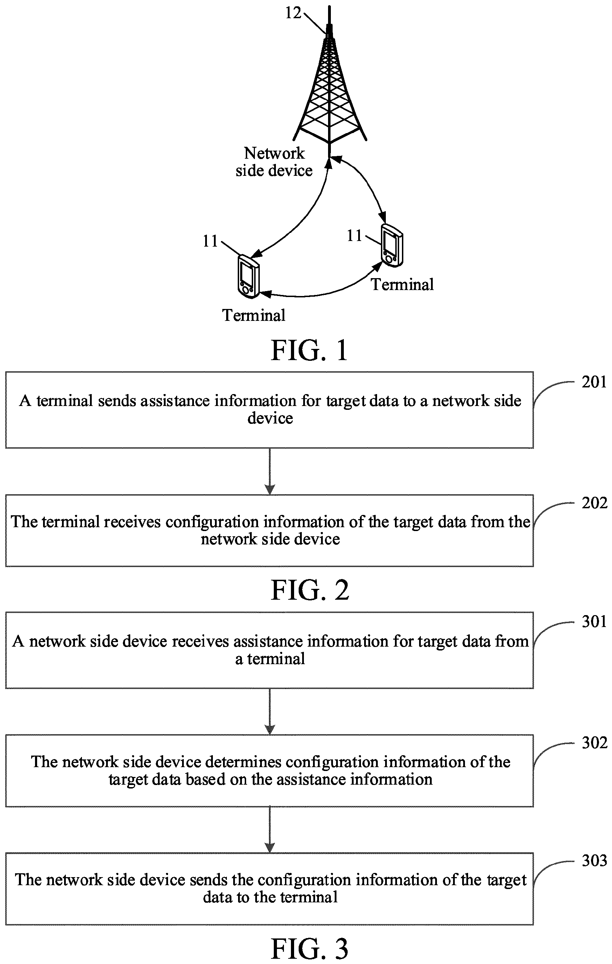

FIG. 1 is a block diagram of a wireless communication system to which an embodiment of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer) or notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), or a smart home (a home device with a wireless communication function, for example, a refrigerator, a television set, a washing machine, or a furniture). The wearable device includes a smartwatch, a smart band, a smart headset, smart glasses, a smart jewelry (a smart bracelet, a smart hand chain, a smart ring, a smart necklace, a smart anklet, a smart ankle chain, or the like), a smart wristband, smart clothing, a game console, and the like. It should be noted that a specific type of the terminal 11 is not limited in embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home NodeB, a home evolved NodeB, a wireless local area network (Wireless Local Area Network, WLAN) access point, a wireless fidelity (Wireless Fidelity, Wi-Fi) node, a transmission and reception point (Transmitting Receiving Point, TRP), or some other appropriate term in the art. As long as the same technical effects are achieved, the base station is not limited to a specific technical term. It should be noted that a base station in an NR system is taken only as an example in embodiments of this application, but a specific type of the base station is not limited.

In embodiments of this application, a network side device configures target data based on assistance information reported by a terminal for the target data, so that a transmission resource can be efficiently used in a transmission process of the target data, high-reliability transmission can be performed, and/or the terminal transmitting the target data implements power saving control and other purposes.

The target data may be at least one of the following data: data in a preset service, data within a preset frequency range, and a data transmitted by a preset cell group, a preset bandwidth part (Bandwidth Part, BWP), a preset carrier, or a carrier. For ease of description, an example in which the target data is XR service data is used for description in the following embodiments, and no specific limit is formed herein.

During implementation, for an XR service, there are the following strict performance requirements: a low-delay requirement, a high data rate (data rate), high reliability (for example, accuracy of a data packet is 99.99% or above), packets arrive according to a non-positive integral cycle (a cycle of data packets is 16.67 ms), and the like.

In addition, the XR service includes many different types of data such as a video, audio, data, an action, and control, and there may be more than one type of data packets at the same time.

Specifically, for the XR service, uplink transmission focuses on dense small data packets. The small data packets may carry information about a gesture, control, and the like, and are used as inputs and references of downlink data presentation. Downlink transmission focuses on multimedia data such as a video and audio. The multimedia data is received and presented in time, to provide immersive experience for a user. For example, for downlink video data, data packets cyclically or quasi-cyclically arrive, a data rate can reach dozens of or even hundreds of Mbps (million bits per second), a typical value of frames per second (Frames Per Second, FPS) is 60 or 120, an interval between adjacent data packets is approximately 1/FPS seconds, and the data is usually required to be successfully transmitted through an air interface within 10 ms, with a transmission success rate required to be not less than 99% or even 99.9%.

For an AR service, uplink transmission may also involve multimedia data such as a video and audio, in addition to the foregoing dense small data packets. An uplink service characteristic is similar to a downlink service characteristic. A data rate is usually low, for example, at most dozens of Mbps, and a time limit for air-interface-based transmission may also be loosened, for example, transmission is usually required to succeed within 60 ms. A downlink data transmission characteristic is substantially consistent with that of a VR service.

In addition, different XR devices may differ in outline dimension, function type, and the like, and the same type of XR devices with different outline dimensions may differ in processing capability, communication type, and power consumption. The XR devices have different outline dimensions, and these outline dimensions may cause differences in processing capability, communication type, and power consumption. For example, as shown in the following Table 1, for different types of XR devices, there may be different parameters in aspects of a communication type, a power consumption, and the like.

**Table 1**

| XR type number | XR device type name | Tethering examples (Tethering Examples) | 5^{th}-generation (5^{th}-Generation, 5G) Uu modem (Uu Modem) | XR engine localization (Engine Localization) | Power supply (Power Supply) | Typical max avail power (Typical Max Avail Power) |
|---|---|---|---|---|---|---|
| XR5G-P1 | Mobile phone | n/a (n/a) | XR device | XR device or split (XR device or split) | Internal (Internal) | 3 to 5 W |
| XR5G-V1 | Simple VR viewer wired tethering (Simple VR Viewer wired tethering) | Universal serial bus Type-C (Universal Serial Bus Type-C, USB-C) | External (External) | External | External | 2 to 5 W |
| XR5G-V2 | Simple VR viewer wireless tethering (Simple VR Viewer wireless tethering) | Standard 802.11ad/y, 5G sidelink, etc. | External | External | Internal | 2 to 3 W |
| XR5G-V3 | Smart VR viewer wireless tethering (Smart VR Viewer wireless tethering) | Standard 802.11ad/y, 5G sidelink, etc. | External | XR device or split | Internal | 2 to 3 W |
| XR5G-V4 | VR head-mounted display (VR HMD Standalone) | n/a | XR device | XR device or split | Internal | 3 to 7 W |
| XR5G-A1 | Simple AR wearable glasses wired tethering (Simple AR Wearable Glasses wired tethering) | USB-C | External | External | External | 1 to 3 W |
| XR5G-A2 | Simple AR wearable glass wireless tethering (Simple AR Wearable Glass wireless tethering) | Standard 802.11ad/y, 5G sidelink, etc. | External | External | Internal | 0.5 to 2 W |
| XR5G-A3 | Smart AR HMD see-through standalone (Smart AR HMD see-through standalone) | n/a | XR device | XR device or split | Internal | 3 to 7 W |
| XR5G-A4 | AR wearable glass standalone (AR Wearable Glass standalone) | n/a | XR device | XR device or split | Internal | 2to4W |
| XR5G-A5 | Smart AR wearable glass wireless tethering (Smart AR Wearable Glass wireless tethering) | Standard 802.11ad/y, 5G sidelink, etc. | External | XR device or split | Internal | 0.5 to 2 W |

It can be learned from Table 1 that different XR devices differ in supported communication mode, processing capability, power consumption, and the like. According to an assistance information reporting method provided in embodiments of this application, the terminal can report, to the network side device, assistance information related to the XR service, so that the network side device performs service configuration matched with the XR related assistance information. In this way, XR service data can be efficiently transmitted through limited air interface resources to better meet a service requirement and improve a throughput.

The following describes in detail the assistance information reporting method, a service configuration method, the terminal, and the network side device provided in embodiments of this application through some embodiments and application scenarios thereof with reference to the accompanying drawings.

Refer to FIG. 2. An assistance information reporting method provided in an embodiment of this application may include the following steps.

Step 201: The terminal sends assistance information for target data to the network side device.

Step 202: The terminal receives configuration information of the target data from the network side device.

In some embodiments, the target data may be XR service data. The assistance information for the target data may be any assistance information related to an XR service, for example, an XR service type supported by the terminal, a type of data transmitted by the terminal during execution of the XR service, or a to-be-transmitted data amount in the XR service. Exhaustions are omitted herein. For ease of description, an example in which the target data is the XR service data and the assistance information for the target data is assistance information related to the XR service is used for description in the following embodiments. Accordingly, in a case that the target data is the XR service data, the configuration information of the target data may be understood as configuration information for configuring the XR service.

Optionally, the assistance information is used to assist the network side device in configuring the configuration information for the target data.

During implementation, the network side device can perform resource scheduling and allocation, transmission adjustment, error management, and other configuration on the XR service by using the assistance information for the XR service data.

For example, the network side device can perform at least one of the following on the XR service by using the assistance information for the XR service data:
allocating and managing an uplink and/or downlink resource;
performing beam management;
performing resource coordination on resources of different terminals served by the network side device;
configuring, activating, or deactivating a semi-static resource;
updating or reconfiguring a configuration parameter of semi-persistent scheduling (Semi-Persistent Scheduling, SPS) or a configured grant (Configured Grant, CG);
discarding, delaying, and/or combining transmission or scheduling of a data packet;
assisting the terminal in power saving control; and
updating or reconfiguring a discontinuous reception (Discontinuous Reception, DRX) parameter.

Optionally, the configuration information includes at least one of the following:
first information for allocating and managing the uplink and/or downlink resource;
second information for performing beam management;
third information for performing resource coordination on the resources of the different terminals served by the network side device;
fourth information for configuring, activating, or deactivating the semi-static resource;
fifth information for updating or reconfiguring the configuration parameter of semi-persistent scheduling SPS or the configured grant CG;
sixth information for discarding, delaying, and/or combining transmission or scheduling of the data packet;
seventh information for assisting the terminal in power saving control; and
eighth information for updating or reconfiguring the discontinuous reception DRX parameter.

For example, if a data transmission error rate of a specific XR service is high, a transmission structure may be adjusted to discard some to-be-transmitted data packets for which errors are predicted to occur, to reduce the data transmission error rate of the XR service.

For a specific configuration manner of resource scheduling and allocation, transmission adjustment, and error management, refer to resource scheduling and allocation, transmission adjustment, and error management in the conventional technology. Details are not described herein again.

In this implementation, target service configuration performed by the network side device on the XR service corresponds to the XR related assistance information reported by the terminal, so that target service configuration is better matched with the XR service, and the XR service data can be more efficiently transmitted through limited air interface resources to better meet a service requirement of the XR service and improve a throughput.

Certainly, during implementation, when receiving the XR related assistance information, the network side device may further perform other configuration than that performed on the XR service, for example, configuration on another service sharing a transmission channel with the XR service, or other configuration on a power consumption level and the like of the terminal that executes the XR service. This is not specifically limited herein.

It should be noted that the assistance information sent by the terminal to the network side device for the target data in this embodiment of this application is different from that reported by the terminal in the conventional technology. Details are as follows.

In LTE and 5G (NR) networks, user equipment (User Equipment, UE) reports assistance information (Assistance Information) based on a network configuration, and configuration information of the network configuration is included in a cell of a "radio resource control (Radio Resource Control, RRC) reconfiguration (Reconfiguration)" message.

In addition, in the conventional technology, the network side device requires the UE to report the assistance information through the foregoing RRC reconfiguration message, so that the UE notifies the network side device of the following information:
power saving (power saving, PS);
a delay budget report (delay budget report, DBR);
overheating (overheating) of the terminal;
the terminal does not expect to send and receive data in the near future (near future);
whether reference time information is expected to be provided;
a frequency of impact of in-device coexistence (In-Device Coexistence, IDC) interference; and
reporting a sidelink traffic pattern (traffic pattern) in a sidelink (Sidelink, SL).

Specifically, the terminal sends UE assistance information (UE assistance information, UAI) to the network side device. The assistance information includes a discontinuous reception (Discontinuous Reception, DRX) related parameter, a secondary cell group (Secondary Cell Group, SCG) configuration, a quantity of configured serving cells (Scells), an aggregate bandwidth, a multi input multi output layer (Multi Input Multi Output layer, MIMO layer), minimum scheduling offset (for example, a K0/K2), an RRC status (for example, a connected state (connected state), an inactive state (inactive state), or an idle state (idle state)), reference time, an IDC interference frequency, SL service information, and the like. For example, the terminal may be configured to perform corresponding assistance information reporting when the following conditions are satisfied:
(1) the terminal tends to adjust a connected mode DRX cycle length for a purpose of the delay budget report;
(2) internal overheating occurs;
(3) for a purpose of power saving, some DRX parameter values, a maximum quantity of reduced secondary component carriers, a reduced maximum aggregate bandwidth, a maximum quantity of reduced MIMO layers, and/or the minimum scheduling offsets K0 and K2 are preferably reported;
(4) the terminal does not expect to send or receive any more data in the near future, and in this case, the terminal may report indication information of a preference in transition from RRC_connected, the indication information representing a preferred RRC state, or the terminal may cancel a previously indicated preference in transition from RRC connected;
(5) the terminal expects/does not expect provision of the reference time information;
(6) a frequency list of impact of an IDC problem is specified in a related communication protocol; and
(7) for the sidelink, the terminal may report an SL traffic pattern of a periodic service to a 5G radio access network (Next Generation Radio Access Network, NG-RAN).

It is worth noting that in the conventional technology, the network side device (an NR node or a 5G base station (gNB)) generally determines whether the foregoing conditions (1) to (7) are satisfied.

In this embodiment of this application, the terminal reports some UE assistance information closely related to the XR service to the network side device, and the network side device may take countermeasures such as adaptive resource scheduling and allocation, transmission adjustment and control, and error management on the XR service based on the XR related assistance information, to improve a throughput and performance of a system.

As an optional implementation, the assistance information includes at least one of the following:
first indication information, where the first indication information indicates at least one of: a protocol data unit (Protocol Data Unit, PDU) session identifier, a quality of service (Quality of Service, QoS) flow identifier, and/or a logical channel identifier that correspond/corresponds to a target service type, a target data frame type, a target data packet, and/or a target data burst, and whether transmitted data is of the target service type, and a data type of the target data;
an association relationship between different data flows or different data bursts of the target data;
a serial number of a group of pictures (Group of Pictures, GOP) of the target data;
a to-be-transmitted data amount of the target data;
duration of a data packet of the target data from generation on an application side to transmission through an air interface;
user experience related information corresponding to the target data, where the user experience related information includes a receiving performance of a physical layer data packet and/or a receiving performance of an application layer;
transmission configuration information expected by a user corresponding to the target data;
indication information for activating or deactivating a semi-static resource for the target data;
an index of a QoS flow corresponding to the target data for which the semi-static resource is activated or deactivated;
indication information for reducing a transmission priority of the target data;
an index of a QoS flow corresponding to the target data whose transmission priority is reduced;
indication information for skipping uplink transmission after the target data;
a semi-persistent scheduling or configured grant transmission cycle recommended by the terminal for the target data;
indication information for reducing a code rate or a resolution of the target data;
configuration information of a DRX configuration for the target data;
power saving indication configuration information of the terminal that performs transmission of the target data;
configuration information of a channel that wakes up transmission of the target data or a signal that wakes up transmission of the target data; and
physical downlink control channel (Physical downlink control channel, PDCCH) monitoring indication configuration information corresponding to the target data.

An example in which the assistance information is the XR related assistance information is used to describe the assistance information as follows.

### Option 1

The first indication information may be used to indicate at least one of the following:
whether the transmitted data is of a target XR service type;
a data type in the XR service; and
a protocol data unit session identifier, a quality of service flow identifier, and/or a logical channel identifier that correspond/corresponds to the target XR service type, a target data frame type, a target data packet, and/or a target data burst.

In a first implementation, the target XR service type may be a preset specified XR service type. In this case, the first indication information may be indication information of the specified XR service type. For example, whether the current XR service is of the target XR service type is indicated by one-bit indication information (for example, if the first indication information is "1", it indicates that the current XR service is of the target XR service type; or if the first indication information is "0", it indicates that the current XR service is not of the target XR service type).

In a second implementation, the target XR service type may be an XR service type of the current XR service, and the first indication information may be indication information of the specific XR service type. For example, if the first indication information indicates type 1 (type 1), it indicates that the current XR service type corresponds to an I frame; if the first indication information indicates type 2 (type 2), it indicates that the current XR service type corresponds to a last frame in a GOP; or if the first indication information indicates type 3, it indicates that the current XR service type corresponds to another frame.

In a third implementation, the first indication information may indicate a PDU session identifier, a QoS flow (flow) identifier, a logical channel identifier (LCID), or the like that corresponds to a specified XR service type, frame, data packet, or data burst (Data burst).

### Option 2

The assistance information may include an association relationship between different data flows or different data bursts in the XR service. The association relationship may be a decoding dependency between the different data flows or different data bursts, or a correlation between sizes of data packets of the different data flows or different data bursts. For example, one-bit indication information is used. If the indication information is "1", it indicates that decoding directly depends on an I frame; or if the indication information is "0", it indicates that decoding does not depend on an I frame.

### Option 3

A serial number of a group of pictures GOP in the XR service is represented by an identifier of a positive integral index (index).

### Option 4

A to-be-transmitted data amount in the XR service may be a quantized data amount. For example, quantization is performed based on a gradient of X bits, and X bits are quantized into 2X bits for reporting. That is, the to-be-transmitted data amount is rounded up with X as a unit.

Certainly, the to-be-transmitted data amount may alternatively be a specific to-be-transmitted data amount with a bit as a unit.

### Option 5

The duration from generation of the data packet on the application side to transmission through the air interface may be used to control round-trip duration of the data packet in the XR service.

### Option 6

The receiving performance of physical layer data packet may be a receiving success rate, wireless transmission duration, or another index of the data packet.

The receiving performance of application layer may be a video quality evaluation index, for example, a mean squared error (Mean Squared Error, MSE), a structural similarity (Structural Similarity, SSIM), a peak signal to noise ratio (Peak Signal to Noise Ratio, PSNR), or a relative peak signal to noise ratio (Relative PSNR, rPSNR). During implementation, the foregoing video quality evaluation indexes may be quantized or mapped into corresponding parameters for reporting.

### Option 7

The transmission configuration information may be a number of retransmission times, a modulation and coding scheme (Modulation and Coding Scheme, MCS) table (table), or the like.

### Option 8

The configuration information of the discontinuous reception DRX configuration includes at least one of the following information:
DRX duration timer information;
DRX cycle start offset information;
DRX inactivity timer information;
DRX retransmission related timer information; and
DRX cycle length information.

### Option 9

The power saving indication configuration information of the terminal may include at least one of the following:
a power saving-radio network temporary identifier (PS-Radio Network Temporary Identifier, PS-RNTI), where the PS-RNTI is used to scramble a cyclic redundancy check (Cyclic redundancy check, CRC) in a downlink control information (Downlink Control Information, DCI) format 2-6;
a power saving offset, where the power saving offset is used to determine detection starting time of the DCI format 2-6;
size information of the DCI format 2-6; and
location information of a power saving indication in the DCI format 2-6.

### Option 10

A channel that wakes up the XR service or a signal that wakes up the XR service may be a wakeup signal of a wakeup service (Wake up Service, WUS). Configuration information of the wakeup channel or the wakeup signal (WUS) may include at least one of the following:
monitoring occasion information of the wakeup channel or the wakeup signal;
monitoring cycle information of the wakeup channel or the wakeup signal;
duration information of a monitoring occasion of the wakeup channel or the wakeup signal;
time-frequency domain resource information of the wakeup channel or the wakeup signal;
monitoring time window information of the wakeup channel or the wakeup signal, where the terminal monitors a wakeup indication at a monitoring occasion of the wakeup channel or the wakeup signal within a monitoring time window;
information about the wakeup indication carried in the wakeup channel or the wakeup signal;
information about a mapping relationship between a wakeup indication and a wakeup indication bit;
frequency hopping format information of the wakeup signal;
sequence information of the wakeup signal;
information about an association relationship between a wakeup channel or a wakeup signal and a search space group;
RNTI information for scrambling first DCI, where the first DCI carries the wakeup indication;
size information of the first DCI; and
starting location information of the wakeup indication in the first DCI.

### Option 11

The PDCCH monitoring indication configuration information may include at least one of the following:
PDCCH monitoring skipping duration information;
information about a mapping relationship between PDCCH monitoring skipping duration and a PDCCH monitoring skipping indication bit;
RNTI information for scrambling second DCI, where the second DCI carries a PDCCH monitoring skipping indication;
size information of the second DCI;
starting location information of the PDCCH monitoring skipping indication in the second DCI;
information for indicating whether to transmit all or a part of a channel state information (Channel State Information, CSI) measurement report within the PDCCH monitoring skipping duration;
configuration information of a dormant search space group, where the terminal skips monitoring a target PDCCH in the dormant search space group; and
activity or inactivity timer information of the dormant search space group.

It should be noted that after receiving the XR related assistance information, the network side device can perform a corresponding service configuration process based on content and a specific value that are included in the XR related assistance information.

Example 1: In a case in which the XR related assistance information includes an association relationship between packet sizes of different data bursts, the network side device may perform some preprocessing for scheduling accordingly; or in a case that the XR related assistance information includes indication information of specific action or control information, the network side device may know that a plenty of corresponding downlink data is to be subsequently transmitted and reserve resources in advance. Therefore, the network side device can implement resource (pre-) scheduling and (pre-) allocation, beam management, and the like on uplink and downlink resources.

Example 2: If the XR related assistance information includes the XR service type of the terminal or a special burst indication (for example, the I frame), the network side device may reserve a resource (an SPS resource or a periodic resource), to ensure transmission of key information. For example, the network side device performs, based on locations of I frames of different terminals, resource coordination for transmission of the different terminals at the corresponding I frames, to implement resource coordination of resources between the different terminals on time and frequency domain.

Example 3: If the XR related assistance information includes indication information (for example, a 1bit indication) indicating that an action or control traffic arrives at the terminal, the network side device may reserve, release, or activate a configured semi-static resource, to implement configuration, activation, deactivation, or the like of the semi-static resource.

Example 4: In a case in which the XR related assistance information includes a decoding association relationship between different data bursts, the network side device may perform some delayed transmission or discarding processing on packets, that is, the network side device implements discarding, delaying, and combination of transmission/scheduling of some data packets.

Certainly, in addition to the foregoing examples, the network side device may further perform other service configuration based on the XR related assistance information, for example, updating/reconfiguring the configuration parameter of SPS/CG, or assisting the UE in performing power saving control or in updating/reconfiguring the DRX parameter. Not all examples are given herein.

During specific implementation, a type of the XR related assistance information (for example, an assistance information type indicating whether to report the first indication information or the to-be-transmitted data amount in the XR service) may be adjusted based on an actual requirement.

Optionally, different service flows correspond to respective assistance information; and/or
different frequency ranges correspond to respective assistance information; and/or
different cell groups (Cell Groups, CGs) correspond to respective assistance information; and/or
different bandwidth parts correspond to respective assistance information; and/or
different cells correspond to respective assistance information; and/or
different carriers correspond to respective assistance information.

In other words, there may be respectively corresponding assistance information for each service flow, each frequency range, each cell group CG, each bandwidth part BWP, each cell, and/or each carrier, and different assistance information may be the same or different. This is not specifically limited herein.

In this implementation, for a same XR service flow, a same frequency range (Frequency Range), a same cell group (Cell Group), a same bandwidth part (Bandwidth Part, BWP), a same cell, or a same carrier, XR related assistance information with same data content may be reported.

During application, the assistance information may be carried in signaling or a message, for example, uplink control information (Uplink Control Information, UCI), a medium access control-control element (Medium Access Control-Control element, MAC CE), RRC, a physical uplink shared channel (Physical Uplink Shared Channel, PUSCH), a buffer status report (Buffer Status Report, BSR), or a scheduling request (Scheduling Request, SR). This is not specifically limited herein.

During specific implementation, reporting of the assistance information is triggered only when the assistance information may be cyclically reported or a specific condition is satisfied.

As an optional implementation, that a terminal sends assistance information for target data to a network side device includes:
in a case that a preset reporting configuration is satisfied, the terminal sends the assistance information for the target data to the network side device, where the preset reporting configuration includes at least one of the following:
a trigger condition corresponding to reporting of the assistance information;
a timer corresponding to reporting of the assistance information; and
an indication about whether reporting of the assistance information is allowed.

In a case in which the preset reporting configuration includes the trigger condition corresponding to reporting of the assistance information, that the preset reporting configuration is satisfied may include: The trigger condition corresponding to reporting of the assistance information is satisfied. In a case in which the preset reporting configuration includes the timer corresponding to reporting of the assistance information, that the preset reporting configuration is satisfied may include: The timer is in a running state, or timing duration of the timer is reached. In a case in which the preset reporting configuration includes the indication about whether reporting of the assistance information is allowed, that the preset reporting configuration is satisfied may include: it indicates that reporting of the assistance information is allowed.

Certainly, during specific implementation, the preset reporting configuration may include at least two of the trigger condition, the timer, and the indication about whether reporting of the assistance information is allowed. In this case, the terminal may be triggered to report the assistance information only in a case that the foregoing preset reporting configurations are all satisfied.

### Implementation 1

In the case in which the preset reporting configuration includes the trigger condition corresponding to reporting of the assistance information, that the preset reporting configuration is satisfied includes at least one of the following:
a target transmission unit arrives at a target protocol layer, where the target transmission unit includes at least one of the following: a data frame, a data slice, an application data unit (Application Data Unit, ADU), and an Internet protocol (Internet Protocol, IP) packet, and the target protocol layer includes at least one of the following: an application layer, an IP layer, a service data adaptation protocol (Service Data Adaptation Protocol, SDAP), layer, a packet data convergence protocol (Packet Data Convergence Protocol, PDCP) layer, a radio link control (Radio Link Control, RLC) layer, a MAC layer, and a physical layer;
the terminal recognizes a target object, or generates an action or control traffic corresponding to the target object, where the target object includes at least one of a target gesture, a target action, a target pose, and a target object at a preset angle;
a quantity of service flows or a quantity of types of service flows generated by a data source of the target data (for example, an XR service source) is greater than a first preset threshold;
in a case that the target data is video service data, a quality evaluation index of a video service (for example, an XR video service) corresponding to the video service data changes;
a related parameter of a service (for example, the XR service) corresponding to the target data changes, where the related parameter of the service includes at least one of a data rate of the service, a cycle of the service, frames per second FPS of the service, and a delay of the service;
a data amount of a first data packet is greater than that of a second data packet, and a difference between the data amounts of the first data and the second data packet is greater than or equal to a first preset data amount, where the first data packet and the second data packet are data packets related to the service corresponding to the target data, and the first data packet is received before the second data packet; or
a data amount of a first data packet is less than that of a second data packet, and a difference between the data amounts of the first data and the second data packet is greater than or equal to a second preset data amount, where the first data packet and the second data packet are data packets related to the service corresponding to the target data, and the first data packet is received before the second data packet;
the service corresponding to the target data is a high-priority or high-importance service;
the terminal obtains periodic action or control information;
a variation in channel quality of the terminal is greater than or equal to a third preset threshold, or a variation in interference around the terminal is greater than or equal to a fourth preset threshold;
a variation in a moving speed of the terminal is greater than or equal to a fifth preset threshold;
the terminal does not detect a data flow of a preset service within first preset duration; and
a load of a central processing unit (central processing unit, CPU) of the terminal is greater than or equal to a preset load, a device temperature is greater than or equal to a preset temperature, a power consumption is greater than or equal to a preset power consumption, remaining power is less than or equal to preset power, or endurance duration is less than or equal to preset threshold duration.

The following uses an example in which the target data is the XR service data and the assistance information is the XR related assistance information to describe the foregoing preset reporting configuration.

### Example 1

In an implementation in which the target transmission unit arrives at the target protocol layer, the target transmission unit may be a specific data frame, data slice, ADU, or IP packet, for example, is an I frame or I data slice (slice), a first P frame after an I frame, a last P frame in a GOP, a first or last data packet (packet) in an I frame/slice, a first or last packet in a P frame/slice, or a first or last packet in an ADU.

### Example 2

In an implementation in which the terminal recognizes the target object, or generates the action or control traffic corresponding to the target object, the target object may be a specific gesture, a specific action, a specific pose, or a specific object that is at a specific angle or that is recognized, which is captured by the terminal through acquisition device such as a camera.

### Example 3

In an implementation in which a quantity of service flows or a quantity of types of service flows generated by the XR service source is greater than the first preset threshold, the first preset threshold may be a positive integer greater than or equal to 1. In this implementation, the XR service source includes many different types of service flows. The different types of service flows may be a video flow, an audio flow, a data flow, and an action or control flow. The video flow may further be divided into an I flow and a P flow, a foreground flow and a background flow, a field of view (FoV) flow and a non-field-of-view (non-FOV) flow, or the like.

During actual application, the terminal may report, in the XR related assistance information, indication information indicating that the quantity of service flows or the quantity of types of the XR service flows generated by the XR service source is greater than the first preset threshold, or the quantity of service flows generated by the XR service source or a specific type of the XR service flow, so that the network side device can accordingly determine that the quantity of service flows or the quantity of types of the XR service flows generated by the XR service source is greater than the first preset threshold.

### Example 4

In an implementation in which a quality evaluation index of the XR video service changes, the quality evaluation index of the XR video service may be an MSE, an SSIM, a PSNR (rPSNR), a packet loss rate (Packet loss rate), a packet late rate (Packet late rate), a slice loss rate for video (Slice loss rate for video), a correct area rate for video (Correct Area rate for video), an area loss rate for video (Area loss rate for video), an area damage rate for video (Area damage rate for video), a quantity of coding tree units (Coding Tree Units, CTUs) that are completely unavailable and damaged), or the like that is reported in the XR related assistance information.

During specific implementation, a second preset threshold may be set. In a case in which the quality evaluation index of the video service is greater than or equal to the second preset threshold, reporting of first assistance information is triggered. In a case in which the quality evaluation index of the video service is less than the second preset threshold, reporting of second assistance information is triggered. The first assistance information and the second assistance information may be same or different assistance information. The second preset threshold is a threshold index corresponding to the quality evaluation index of the video service. A specific value of the second preset threshold may be set based on a scenario requirement. This is not specifically limited herein.

In an optional implementation, that the quality evaluation index of the video service corresponding to the video service data changes includes:
in a case that the quality evaluation index of the video service includes at least two threshold ranges, a target threshold range in which the quality evaluation index of the video service is located changes, where the at least two threshold ranges include the target threshold range.

In this implementation, the quality evaluation index of the video service is quantized into a plurality of levels. In this way, when a level of the quality evaluation index of the video service changes, reporting of the assistance information is triggered. That is, when the quality evaluation index of the video service fluctuates, reporting of the assistance information is triggered. During implementation, different threshold ranges may correspond to respective assistance information. That is, when the target threshold range in which the quality evaluation index of the video service is located changes, reporting of assistance information corresponding to the target threshold range is triggered.

In another optional implementation, that the quality evaluation index of the video service corresponding to the video service data changes includes:
in a case that the quality evaluation index of the video service includes at least two thresholds, the quality evaluation index of the video service increases to be greater than a target threshold or decreases to be less than a target threshold, where the at least two thresholds include the target threshold.

That a terminal sends assistance information for target data to a network side device includes:
the terminal sends, to the network side device, assistance information that corresponds to the target threshold and that is for the target data, where different thresholds correspond to respective assistance information.

A difference of this implementation from the previous optional implementation relies on setting a plurality of thresholds for the quality evaluation index of the video service, and when the quality evaluation index changes to be greater than or less than a specific threshold, reporting of assistance information corresponding to the threshold is triggered. That is, when a value of the quality evaluation index of the video service changes, the assistance information reported by the terminal changes. Therefore, the terminal reports assistance information more flexibly.

### Example 5

The data amount of the first data packet is greater than that of the second data packet, and the difference between the data amounts of the first data and the second data packet is greater than or equal to the first preset data amount. The first data packet and the second data packet are data packets related to the XR service, and the first data packet is received before the second data packet. It may indicate that a size of a current data packet is greater than that of a previous data packet by a specific threshold, and in this case, reporting of XR related assistance information may be triggered.

Similarly, the data amount of the first data packet is less than that of the second data packet, and the difference between the data amounts of the first data and the second data packet is greater than or equal to the second preset data amount. The first data packet and the second data packet are data packets related to the XR service, and the first data packet is received before the second data packet. It may indicate that a size of a current data packet is less than that of a previous data packet by a specific threshold, and in this case, reporting of XR related assistance information may also be triggered.

It should be noted that when the size of the current data packet is greater than and less than that of the previous data packet by a specific threshold, reporting of respective XR related assistance information may be triggered respectively.

### Example 6

In an implementation in which the terminal obtains the high-priority or high-importance XR service, the high-priority or high-importance XR service may specifically arrive at a specific protocol layer (layer), for example, the application layer (Application layer), the IP layer, the SDAP layer, the PDCP layer, the RLC layer, the MAC layer, or the physical layer.

Accordingly, in an implementation in which the terminal obtains the periodic action or control information, the periodic action or control information may specifically arrive at a specific protocol layer (layer), for example, the application layer (Application layer), the IP layer, the SDAP layer, the PDCP layer, the RLC layer, the MAC layer, or the physical layer.

### Example 7

In an implementation in which the change in the channel quality of the terminal is greater than or equal to the third preset threshold or the change in the interference around the terminal is greater than or equal to the fourth preset threshold, the third preset threshold may be a preset channel quality change threshold, and the fourth preset threshold may be a preset interference threshold. Values of the third preset threshold and the fourth preset threshold may both be set or adjusted based on an actual requirement. This is not specifically limited herein.

### Example 8

In an implementation in which the change in the moving speed of the terminal is greater than or equal to the fifth preset threshold, the moving speed may specifically be an average speed per hour of the terminal within a period of time, or may be an instantaneous speed. This is not specifically limited herein. In addition, the fifth preset threshold may be a preset speed change threshold. A value of the fifth preset threshold may be set or adjusted based on an actual requirement. This is not specifically limited herein.

### Example 9

In an implementation in which the load of the central processing unit CPU of the terminal is greater than or equal to the preset load, the device temperature is greater than or equal to the preset temperature, the power consumption is greater than or equal to the preset power consumption, the remaining power is less than or equal to the preset power, or the endurance duration is less than or equal to the preset threshold duration, the network side device may maximally prolong endurance of the terminal and reduce the device temperature, in a manner of configuring the terminal to appropriately reduce a code rate or a resolution, or the like.

It should be noted that when different trigger conditions are satisfied, the terminal may report assistance information corresponding to the trigger conditions. That is, different trigger conditions may correspond to different assistance information.

### Implementation 2

If the preset reporting configuration includes the timer corresponding to reporting of the assistance information, the assistance information may be reported in a case that the timer is in a running state (that is, a timing state) or a non-running state (that is, stops timing or does not start a timing state).

As an optional implementation, the timer enters the non-running state when running time reaches second preset duration. The second preset duration is transmission duration corresponding to N symbols, N slots, N subframes, or N system frames. Alternatively, the second preset duration is preset absolute duration. N is a positive integer.

In a case in which the preset reporting configuration includes the timer corresponding to reporting of the assistance information, that the preset reporting configuration is satisfied includes:
the timer is in the non-running state; or
the timer is in the running state.

In an implementation, that the preset reporting configuration is satisfied includes: the timer is in the non-running state. This can be understood as follows: During running of the timer, the terminal does not report the assistance information; or when the timer does not run (the timer expires or does not start, or the timer is not configured), the terminal is allowed to report the assistance information, and starts a new timer at the same time.

In another implementation, that the preset reporting configuration is satisfied includes: the timer is in the running state. This can be understood as follows: When the timer is in the running state, the terminal does not report the assistance information; or when the timer does not run (the timer expires or does not start, or the timer is not configured), the terminal does not report the assistance information.

It is worth noting that during actual application, the preset reporting configuration may include both the trigger condition corresponding to reporting of the assistance information and the timer corresponding to reporting of the assistance information.

Manner 1: Whether the timer satisfies an occasion of reporting the assistance information (for example, the timer is in the non-running state) is first determined. In a case in which a determining result is "yes", whether the trigger condition corresponding to reporting of the assistance information is satisfied is further determined. In this way, in a case that both the occasion and the trigger condition are satisfied, the terminal reports the assistance information, and starts a new timer.

Manner 2: Whether the trigger condition corresponding to reporting of the assistance information is satisfied is first determined. In a case in which a determining result is "yes", the timer is started. When the timer satisfies an occasion of reporting the assistance information (for example, the timer is in the running state), the terminal reports the assistance information.

Optionally, respective timers are configured for reporting of different types of assistance information.

During implementation, different timers may have different timing duration.

During specific implementation, different timers are configured for different types of XR related assistance information, so that reporting frequencies of the different types of XR related assistance information can be adjusted respectively, for example, a reporting frequency of high-importance or high-update-frequency XR related assistance information is improved.

In this implementation, a reporting frequency of each type of assistance information can be flexibly configured.

### Implementation 3

In a case in which the preset reporting configuration includes the indication about whether reporting of the assistance information is allowed, the terminal can report the assistance information only when the indication allows reporting of the assistance information. That is, the indication about whether reporting of the assistance information is allowed can be understood as a switch of whether to allow reporting of the assistance information. When the switch is on, reporting of the assistance information is allowed; or when the switch is off, reporting of the assistance information is not allowed.

It should be noted that during actual application, different types of assistance information may separately correspond to different switches. For example, if a switch corresponding to reporting of assistance information "reduce the code rate or the resolution" by the terminal is enabled (allow), the terminal may report the XR related assistance information "reduce the code rate or the resolution" in a case that all other preset reporting configurations are satisfied. If a switch corresponding to reporting of assistance information "specific service type/frame/data packet/data burst" by the terminal is enabled, the terminal may report the XR related assistance information "specific service type/frame/data packet/data burst" in a case that all other preset reporting configurations are satisfied.

During implementation, the indication about whether reporting of the assistance information is allowed can be 1bit indication information. For example, when a value of the indication is "1", it indicates that the terminal enables an assistance information reporting function; or when a value of the indication is "0", it indicates that the terminal disables an assistance information reporting function.

Certainly, during actual application, Implementation 1 to Implementation 3 may be combined. For example, the preset reporting configuration includes the trigger condition corresponding to reporting of the assistance information, the timer corresponding to reporting of the assistance information, and the indication about whether reporting of the assistance information is allowed. In this case, the terminal reports the assistance information only in a case that the three configuration conditions are satisfied.

As an optional implementation, that a terminal sends assistance information for target data to a network side device includes:
in a case that reporting of the assistance information for the target data is allowed and the terminal has not reported the assistance information for the target data, the terminal reports the assistance information for the target data for a first time, and starts a first timer; and
in a case that the first timer is in the non-running state and the trigger condition corresponding to reporting of the assistance information for the target data is triggered, the terminal reports the assistance information for the target data for a second time, and restarts the first timer.

That reporting of the assistance information for the target data is allowed can be understood as follows: The terminal enables the assistance information reporting function for the target data, and the trigger condition corresponding to reporting of the assistance information is satisfied.

That reporting of the assistance information for the target data is allowed and the terminal does not report the assistance information for the target data can be understood as follows: The terminal does not start the first timer corresponding to reporting of the assistance information after triggering reporting of the assistance information and before reporting the assistance information for the first time. In this case, the terminal directly reports the assistance information, and starts the first timer.

Accordingly, in a process of reporting the assistance information for the second time after the assistance information is reported for the first time and a possible subsequent reporting process of reporting the assistance information for a third time, reporting may be directly performed based on timing of the first timer that has been started. That is, that the first timer is in the non-running state indicates that timing duration of the first timer reaches the preset timing duration. Each time reporting of the assistance information is completed, the first timer is restarted to restart timing, to provide a reference for determining a reporting occasion of reporting the assistance information next time.

In addition, the preset timing duration may be determined based on a type of the corresponding assistance information, or is duration configured by the network side device.

Optionally, that the terminal reports the assistance information for the target data for a second time includes:
reporting the assistance information for the target data at least once during the running state of the first timer;
   or
measuring and/or collecting the assistance information for the target data within a first time period during the running state of the first timer; and
reporting the measured and/or collected assistance information for the target data at an end of the first time period, where the first time period is a continuous period of time or a discontinuous period of time that is determined based on a predetermined rule.

In a first implementation, a manner in which the terminal reports the assistance information for the target data at least once during the running state of the first timer specifically includes: reporting the assistance information for the target data at least once within the timer. If reported for a plurality of times, the assistance information may be reported cyclically or based on a predefined rule. This is not specifically limited herein.

In a second implementation, a manner in which the terminal reports the assistance information for the target data at least once during the running state of the first timer specifically includes: measuring and/or collecting the assistance information for a period of time during running of the timer, and reporting the measured and/or collected assistance information to the network side device at an end of this period of time.

The period of time in which the terminal measures and/or collects the assistance information may be a continuous period of time (for example, 5 s or 10 ms) or a discontinuous period of time that is determined based on a predetermined rule (for example, if a packet loss rate is higher, measurement and/or collection time is longer). The predetermined rule is not specifically limited herein.

As an optional implementation, the terminal may obtain the preset reporting configuration in the following manners.

### Manner 1

The terminal pre-stores the preset reporting configuration.

In this manner, preset reporting configuration information may be written to a storage unit of the terminal in a delivery phase of the terminal.

### Manner 2

Before the terminal sends the assistance information for the target data to the network side device, the method further includes:
the terminal receives pre-configuration information from the network side device, where the pre-configuration information is used to configure the preset reporting configuration.

In this manner, the network side device may configure the preset reporting configuration for the terminal in a pre-configuration phase. For example, a base station configures the preset reporting configuration for the terminal in a network access phase of the terminal.

### Manner 3

Before the terminal sends the assistance information for the target data to the network side device, the method further includes:
the terminal receives second indication information from the network side device, where the second indication information indicates the preset reporting configuration.

For example, the network side device delivers the preset reporting configuration for XR related assistance information to an AR terminal (or a terminal of a same type) through RRC information as follows:
(1) configuring a trigger condition corresponding to reporting of the XR related assistance information to be that periodic action or control information arrives at the PDCP layer;
(2) configuring a timer T3 corresponding to reporting of the XR related assistance information, with timing duration being 100 milliseconds; and
(3) configuring a switch corresponding to reporting of the XR related assistance information to be enabled.

In this case, the AR terminal triggers, based on the preset reporting configuration, reporting of the corresponding XR related assistance information (for example, an indication of activating/releasing a configured semi-static resource) in a case of determining that the preset reporting configuration is satisfied.

For example, when the switch corresponding to reporting of the XR related assistance information by the AR terminal is enabled, the periodic action or control information arrives at the PDCP layer, and the corresponding timer is not started, the indication of activating releasing the configured semi-static resource is reported. Accordingly, the network side device (for example, the base station) activates the corresponding semi-static resource based on the received XR related assistance information.

In this manner, the network side device may indicate the preset reporting configuration to the terminal through the second indication information. The indication information may also be indication information in a message such as RRC or a MAC CE. This manner is more flexible than the other two manners. In addition, an existing preset reporting configuration may be updated through the second indication information.

As an optional implementation, the assistance information reporting method shown in FIG. 2 further includes:
the terminal sends capability information to the network side device; and
the terminal receives configuration information of the preset reporting configuration from the network side device, where the preset reporting configuration corresponds to the capability information, and terminals with different capability information correspond to respective preset reporting configurations.

During specific implementation, different terminals may have different capability information. For example, the capability information may include at least one of the following:
a service type supported by the terminal, for example, an AR service, a VR service, or a CG service;
a terminal type of the terminal, for example, an AR terminal, a VR terminal, or a CG terminal; and
a tethering (Tethering) mode supported by the terminal, for example, a wired connection or a wireless connection.

Certainly, during specific implementation, in addition to the XR service type supported by the terminal, the terminal type, and the tethering (Tethering) mode supported by the terminal, the capability information may further include other capability information, for example, a supported frequency band. Exhaustions are omitted herein.

In addition, in a case that different preset reporting configurations are satisfied, the terminal may be triggered to report different types of assistance information. In this way, the preset reporting configuration corresponds to the capability information, so that the assistance information reported by the terminal triggered based on the preset reporting configuration is better matched with the capability information of the terminal. For example, for a terminal that does not support an SPS service, XR related assistance information reported by the terminal may be configured to not include a semi-persistent scheduling SPS transmission cycle recommended by the terminal for an XR service.

In this implementation, the terminal reports the capability information related to the XR service to the network side device, so that the network side device configures the preset reporting configuration matched with the capability information of the terminal to the terminal accordingly, and can trigger, by using the preset reporting configuration at an occasion matched with the capability information of the terminal device, the terminal to report the XR related assistance information matched with the capability information of the terminal. This improves practicability of the XR related assistance information reported by the terminal.

Refer to FIG. 3. An embodiment of this application provides a service configuration method. The service configuration method corresponds to the assistance information reporting method shown in FIG. 2. A difference relies on that the service configuration method in this embodiment of this application is performed by a network side device. As shown in FIG. 3, the service configuration method may include the following steps.

Step 301: The network side device receives assistance information for target data from a terminal.

Step 302: The network side device determines configuration information of the target data based on the assistance information.

Step 303: The network side device sends the configuration information of the target data to the terminal.

The target data, the assistance information for the target data, and a target service configuration have same meanings and functions as the target data, the assistance information for the target data, and a target service configuration in the assistance information reporting method shown in FIG. 2 respectively. Details are not described herein.

Optionally, the configuration information includes at least one of the following:
first information for allocating and managing an uplink and/or downlink resource;
second information for performing beam management;
third information for performing resource coordination on resources of different terminals served by the network side device;
fourth information for configuring, activating, or deactivating a semi-static resource;
fifth information for updating or reconfiguring a configuration parameter of semi-persistent scheduling SPS or a configured grant CG;
sixth information for discarding, delaying, and/or combining transmission or scheduling of a data packet;
seventh information for assisting the terminal in power saving control; and
eighth information for updating or reconfiguring a discontinuous reception DRX parameter.

Optionally, the assistance information includes at least one of the following:
first indication information, where the first indication information indicates at least one of a protocol data unit PDU session identifier, a quality of service QoS flow identifier, and/or a logical channel identifier that correspond/corresponds to a target service type, a target data frame type, a target data packet, and/or a target data burst, and whether transmitted data is of the target service type, and a data type of the target data;
an association relationship between different data flows or different data bursts of the target data;
a serial number of a group of pictures GOP of the target data;
a to-be-transmitted data amount of the target data;
duration of a data packet of the target data from generation on an application side to transmission through an air interface;
user experience related information corresponding to the target data, where the user experience related information includes a receiving performance of a physical layer data packet and/or a receiving performance of an application layer;
transmission configuration information expected by a user corresponding to the target data;
indication information for activating or deactivating a semi-static resource for the target data;
an index of a QoS flow corresponding to the target data for which the semi-static resource is activated or deactivated;
indication information for reducing a transmission priority of the target data;
an index of a QoS flow corresponding to the target data whose transmission priority is reduced;
indication information for skipping uplink transmission after the target data;
an SPS or configured grant CG transmission cycle recommended by the terminal for the target data;
indication information for reducing a code rate or a resolution of the target data;
configuration information of a DRX configuration for the target data;
power saving indication configuration information of the terminal that performs transmission of the target data;
configuration information of a channel that wakes up transmission of the target data or a signal that wakes up transmission of the target data; and
physical downlink control channel PDCCH monitoring indication configuration information corresponding to the target data.

Optionally, the method further includes:
the network side device sends configuration information of a preset reporting configuration to the terminal.

Optionally, before the network side device sends the configuration information of the preset reporting configuration to the terminal, the method further includes:
the network side device receives capability information from the terminal.

The preset reporting configuration corresponds to the capability information. Terminals with different capability information correspond to respective preset reporting configurations.

Optionally, the capability information includes at least one of the following:
a service type supported by the terminal;
a terminal type of the terminal; and
a tethering mode supported by the terminal.

Optionally, different service flows correspond to respective assistance information; and/or
different frequency ranges correspond to respective assistance information; and/or
different cell groups CG correspond to respective assistance information; and/or
different bandwidth parts BWP correspond to respective assistance information; and/or
different cells correspond to respective assistance information; and/or
different carriers correspond to respective assistance information.

Optionally, XR related assistance information is carried in UCI, a MAC CE, RRC signaling, a PUSCH, a BSR, or an SR.

The service configuration method provided in this embodiment of this application corresponds to the assistance information reporting method in the method embodiment shown in FIG. 2. With the two methods, the target data can be efficiently transmitted through limited air interface resources to better meet a service requirement and improve a throughput.

It should be noted that the assistance information reporting method provided in embodiments of this application may be performed by an assistance information reporting apparatus, or by a control module, for performing the assistance information reporting method, in an assistance information reporting apparatus. In an embodiment of this application, an assistance information reporting apparatus provided in this embodiment of this application is described with an example in which the assistance information reporting method is performed by the assistance information reporting apparatus.

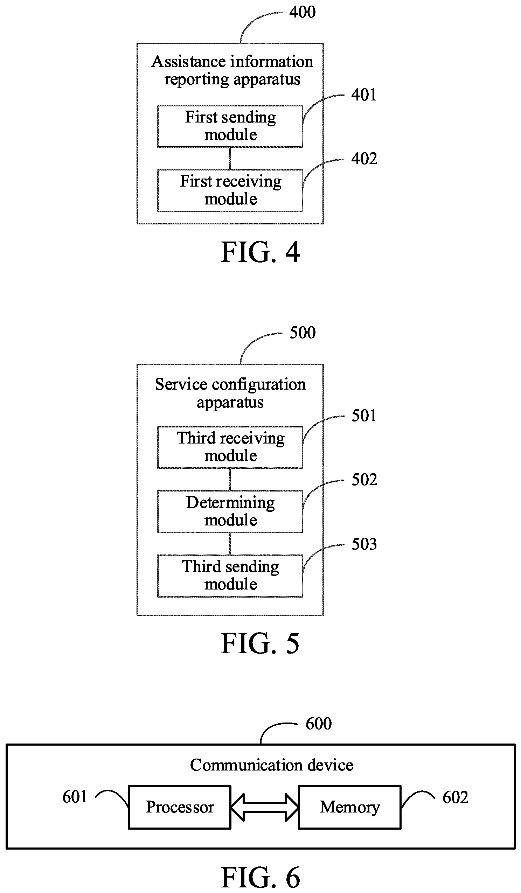

Refer to FIG. 4. An assistance information reporting apparatus 400 provided in an embodiment of this application includes:
a first sending module 401, configured to send assistance information for target data to a network side device; and
a first receiving module 402, configured to receive configuration information of the target data from the network side device.

Optionally, the assistance information is used to assist the network side device in configuring the configuration information for the target data.

Optionally, the configuration information includes at least one of the following:
first information for allocating and managing an uplink and/or downlink resource;
second information for performing beam management;
third information for performing resource coordination on resources of different terminals served by the network side device;
fourth information for configuring, activating, or deactivating a semi-static resource;
fifth information for updating or reconfiguring a configuration parameter of SPS or a configured grant CG;
sixth information for discarding, delaying, and/or combining transmission or scheduling of a data packet;
seventh information for assisting a terminal in power saving control; and
eighth information for updating or reconfiguring a discontinuous reception DRX parameter.

Optionally, the assistance information includes at least one of the following:
first indication information, where the first indication information indicates at least one of a protocol data unit PDU session identifier, a quality of service QoS flow identifier, and/or a logical channel identifier that correspond/corresponds to a target service type, a target data frame type, a target data packet, and/or a target data burst, and whether transmitted data is of the target service type, and a data type of the target data;
an association relationship between different data flows or different data bursts of the target data;
a serial number of a group of pictures GOP of the target data;
a to-be-transmitted data amount of the target data;
duration of a data packet of the target data from generation on an application side to transmission through an air interface;
user experience related information corresponding to the target data, where the user experience related information includes a receiving performance of a physical layer data packet and/or a receiving performance of an application layer;
transmission configuration information expected by a user corresponding to the target data;
indication information for activating or deactivating a semi-static resource for the target data;
an index of a QoS flow corresponding to the target data for which the semi-static resource is activated or deactivated;
indication information for reducing a transmission priority of the target data;
an index of a QoS flow corresponding to the target data whose transmission priority is reduced;
indication information for skipping uplink transmission after the target data;
an SPS or configured grant CG transmission cycle recommended by the terminal for the target data;
indication information for reducing a code rate or a resolution of the target data;
configuration information of a DRX configuration for the target data;
power saving indication configuration information of the terminal that performs transmission of the target data;
configuration information of a channel that wakes up transmission of the target data or a signal that wakes up transmission of the target data; and
physical downlink control channel PDCCH monitoring indication configuration information corresponding to the target data.

Optionally, the first sending module 401 is specifically configured to:
in a case that a preset reporting configuration is satisfied, send the assistance information for the target data to the network side device, where the preset reporting configuration includes at least one of the following:
a trigger condition corresponding to reporting of the assistance information;
a timer corresponding to reporting of the assistance information; and
an indication about whether reporting of the assistance information is allowed.

Optionally, in the case in which the preset reporting configuration includes the trigger condition corresponding to reporting of the assistance information, that the preset reporting configuration is satisfied includes at least one of the following:
a target transmission unit arrives at a target protocol layer, where the target transmission unit includes at least one of the following: a data frame, a data slice, an application data unit ADU, and an Internet protocol IP packet, and the target protocol layer includes at least one of the following: an application layer, an IP layer, a service data adaptation protocol SADP layer, a packet data convergence protocol PDCP layer, a radio link control RLC layer, a medium access control MAC layer, and a physical layer;
the terminal recognizes a target object, or generates an action or control traffic corresponding to the target object, where the target object includes at least one of a target gesture, a target action, a target pose, and a target object at a preset angle;
a quantity of service flows or a quantity of types of service flows generated by a data source of the target data is greater than a first preset threshold;
in a case that the target data is video service data, a quality evaluation index of a video service corresponding to the video service data changes;
a related parameter of a service corresponding to the target data changes, where the related parameter of the service includes at least one of a data rate of the service, a cycle of the service, frames per second FPS of the service, and a delay of the service;
a data amount of a first data packet is greater than that of a second data packet, and a difference between the data amounts of the first data and the second data packet is greater than or equal to a first preset data amount, where the first data packet and the second data packet are data packets related to the service corresponding to the target data, and the first data packet is received before the second data packet; or
a data amount of a first data packet is less than that of a second data packet, and a difference between the data amounts of the first data and the second data packet is greater than or equal to a second preset data amount, where the first data packet and the second data packet are data packets related to the service corresponding to the target data, and the first data packet is received before the second data packet;
the service corresponding to the target data is a high-priority or high-importance service;
the terminal obtains periodic action or control information;
a variation in channel quality of the terminal is greater than or equal to a third preset threshold, or a variation in interference around the terminal is greater than or equal to a fourth preset threshold;
a variation in a moving speed of the terminal is greater than or equal to a fifth preset threshold;
the terminal does not detect a data flow of a preset service within first preset duration; and
a load of a central processing unit CPU of the terminal is greater than or equal to a preset load, a device temperature is greater than or equal to a preset temperature, a power consumption is greater than or equal to a preset power consumption, remaining power is less than or equal to preset power, or endurance duration is less than or equal to preset threshold duration.

Optionally, that the quality evaluation index of the video service changes includes:
in a case that the quality evaluation index of the video service includes at least two threshold ranges, a target threshold range in which the quality evaluation index of the video service is located changes, where the at least two threshold ranges include the target threshold range;
   or
in a case that the quality evaluation index of the video service includes at least two thresholds, the quality evaluation index of the video service increases to be greater than a target threshold or decreases to be less than a target threshold, where the at least two thresholds include the target threshold. That the terminal sends the assistance information for the target data to the network side device includes:
   the terminal sends, to the network side device, assistance information that corresponds to the target threshold and that is for the target data, where different thresholds correspond to respective assistance information.

Optionally, the timer enters a non-running state when running time reaches second preset duration. The second preset duration is transmission duration corresponding to N symbols, N slots, N subframes, or N system frames. Alternatively, the second preset duration is preset absolute duration. N is a positive integer.

In a case in which the preset reporting configuration includes the timer corresponding to reporting of the assistance information, that the preset reporting configuration is satisfied includes:
the timer is in the non-running state; or
the timer is in a running state.

Optionally, respective timers are configured for reporting of different types of assistance information.

Optionally, the first sending module 401 includes:
a first reporting unit, configured to: in a case that reporting of the assistance information for the target data is allowed and the terminal has not reported the assistance information for the target data, report, by the terminal, the assistance information for the target data for a first time, and start a first timer; and
a second reporting unit, configured to: in a case that the first timer is in the non-running state and the trigger condition corresponding to reporting of the assistance information for the target data is triggered, report, by the terminal, the assistance information for the target data for a second time, and restart the first timer.

Optionally, the second reporting unit includes:
a first reporting subunit, configured to report the assistance information for the target data at least once during the running state of the first timer;
   or
a measurement and collection subunit, configured to measure and/or collect the assistance information for the target data within a first time period during the running state of the first timer; and
a second reporting subunit, configured to report the measured and/or collected assistance information for the target data at an end of the first time period, where the first time period is a continuous period of time or a discontinuous period of time that is determined based on a predetermined rule.

Optionally, the terminal pre-stores the preset reporting configuration;
or
before the terminal sends the assistance information for the target data to the network side device,
the terminal receives pre-configuration information from the network side device, where the pre-configuration information is used to configure the preset reporting configuration; or
the terminal receives second indication information from the network side device, where the second indication information indicates the preset reporting configuration.

Optionally, the assistance information reporting apparatus 400 further includes:
a second sending module, configured to send capability information to the network side device; and
a second receiving module, configured to receive configuration information of the preset reporting configuration from the network side device, where the preset reporting configuration corresponds to the capability information, and terminals with different capability information correspond to respective preset reporting configurations.

Optionally, the capability information includes at least one of the following:
a service type supported by the terminal;
a terminal type of the terminal; and
a tethering mode supported by the terminal.

Optionally, different service flows correspond to respective assistance information; and/or
different frequency ranges correspond to respective assistance information; and/or
different cell groups CG correspond to respective assistance information; and/or
different bandwidth parts BWP correspond to respective assistance information; and/or
different cells correspond to respective assistance information; and/or
different carriers correspond to respective assistance information.

Optionally, the assistance information is carried in UCI, a MAC CE, RRC signaling, a PUSCH, a BSR, or an SR.

The assistance information reporting apparatus 400 provided in this embodiment of this application can implement processes implemented in the method embodiment shown in FIG. 2, with same beneficial effects as the method embodiment shown in FIG. 2 achieved. To avoid repeated description, details are not described herein again.

The assistance information reporting apparatus 400 in this embodiment of this application may be an apparatus, an apparatus or electronic device with an operating system, or a component, an integrated circuit, or a chip in the terminal. The apparatus or electronic device may be a mobile terminal or a non-mobile terminal. For example, the mobile terminal may include but is not limited to types of a terminal 11 listed above, and the non-mobile terminal may be a server, a network attached storage (Network Attached Storage, NAS), a personal computer (personal computer, PC), a television (television, TV), an automated teller machine, a self-service machine, or the like. This is not specifically limited in embodiments of this application.

It should be noted that the service configuration method provided in embodiments of this application may be performed by a service configuration apparatus, or by a control module, for performing the service configuration method, in a service configuration apparatus. In an embodiment of this application, a service configuration apparatus provided in this embodiment of this application is described with an example in which the service configuration method is performed by the service configuration apparatus.

Refer to FIG. 5. A service configuration apparatus 500 provided in an embodiment of this application includes:
a third receiving module 501, configured to receive assistance information for target data from a terminal;
a determining module 502, configured to determine configuration information of the target data based on the assistance information; and
a third sending module, configured to send the configuration information of the target data to the terminal.

Optionally, the configuration information includes at least one of the following:
first information for allocating and managing an uplink and/or downlink resource;
second information for performing beam management;
third information for performing resource coordination on resources of different terminals served by a network side device;
fourth information for configuring, activating, or deactivating a semi-static resource;
fifth information for updating or reconfiguring a configuration parameter of semi-persistent scheduling SPS or a configured grant CG;
sixth information for discarding, delaying, and/or combining transmission or scheduling of a data packet;
seventh information for assisting the terminal in power saving control; and
eighth information for updating or reconfiguring a discontinuous reception DRX parameter.

Optionally, the assistance information includes at least one of the following:
first indication information, where the first indication information indicates at least one of a protocol data unit PDU session identifier, a quality of service QoS flow identifier, and/or a logical channel identifier that correspond/corresponds to a target service type, a target data frame type, a target data packet, and/or a target data burst, and whether transmitted data is of the target service type, and a data type of the target data;
an association relationship between different data flows or different data bursts of the target data;
a serial number of a group of pictures GOP of the target data;
a to-be-transmitted data amount of the target data;
duration of a data packet of the target data from generation on an application side to transmission through an air interface;
user experience related information corresponding to the target data, where the user experience related information includes a receiving performance of a physical layer data packet and/or a receiving performance of an application layer;
transmission configuration information expected by a user corresponding to the target data;
indication information for activating or deactivating a semi-static resource for the target data;
an index of a QoS flow corresponding to the target data for which the semi-static resource is activated or deactivated;
indication information for reducing a transmission priority of the target data;
an index of a QoS flow corresponding to the target data whose transmission priority is reduced;
indication information for skipping uplink transmission after the target data;
an SPS or configured grant CG transmission cycle recommended by the terminal for the target data;
indication information for reducing a code rate or a resolution of the target data;
configuration information of a DRX configuration for the target data;
power saving indication configuration information of the terminal that performs transmission of the target data;
configuration information of a channel that wakes up transmission of the target data or a signal that wakes up transmission of the target data; and
physical downlink control channel PDCCH monitoring indication configuration information corresponding to the target data.

Optionally, the service configuration apparatus 500 further includes:
a fourth sending module, configured to send configuration information of a preset reporting configuration to the terminal.

Optionally, the service configuration apparatus 500 further includes:
a fourth receiving module, configured to receive capability information from the terminal.

The preset reporting configuration corresponds to the capability information. Terminals with different capability information correspond to respective preset reporting configurations.

Optionally, the capability information includes at least one of the following:
a service type supported by the terminal;
a terminal type of the terminal; and
a tethering mode supported by the terminal.

Optionally, different service flows correspond to respective assistance information; and/or
different frequency ranges correspond to respective assistance information; and/or
different cell groups CG correspond to respective assistance information; and/or
different bandwidth parts BWP correspond to respective assistance information; and/or
different cells correspond to respective assistance information; and/or
different carriers correspond to respective assistance information.

Optionally, the assistance information is carried in UCI, a MAC CE, RRC signaling, a PUSCH, a BSR, or an SR.

The service configuration apparatus 500 provided in this embodiment of this application can implement processes implemented in the method embodiment shown in FIG. 3, with same beneficial effects as the method embodiment shown in FIG. 3 achieved. To avoid repeated description, details are not described herein again.

Optionally, as shown in FIG. 6, an embodiment of this application further provides a communication device 600, including a processor 601, a memory 602, and a program or instructions stored in the memory 602 and runnable on the processor 601. For example, when the communication device 600 is a terminal, and the program or instructions are executed by the processor 601, processes of the assistance information reporting method embodiment are implemented, with same technical effects achieved. When the communication device 600 is a network side device, and the program or instructions are executed by the processor 601, processes of the service configuration method embodiment are implemented, with same technical effects achieved. To avoid repetition, details are not described herein again.

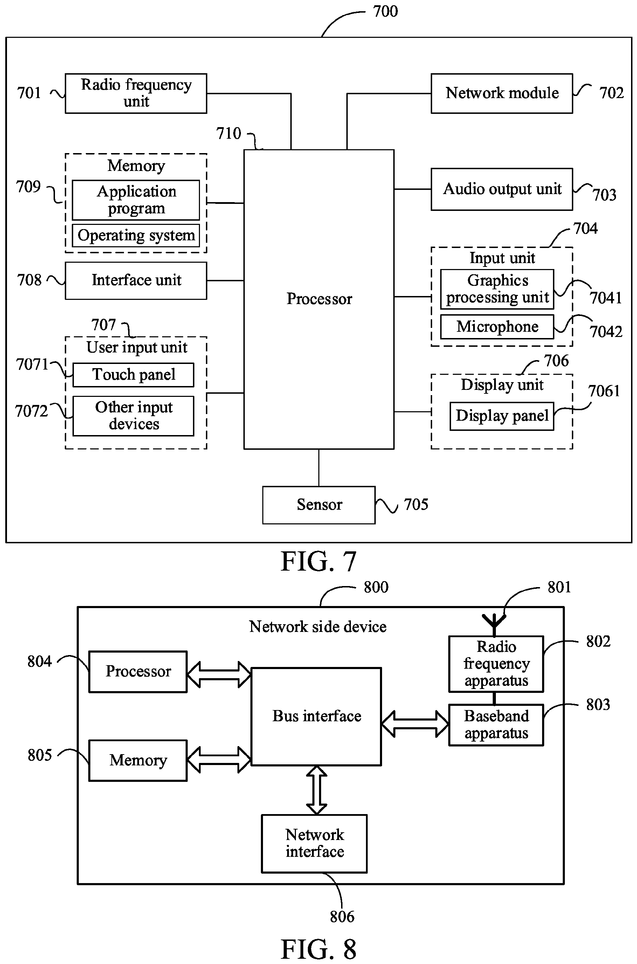

An embodiment of this application further provides a terminal, including a processor and a communication interface. The communication interface is configured to send XR related assistance information to a network side device. The terminal embodiment corresponds to the method embodiment for a terminal side. Implementation processes and implementations of the method embodiment are applicable to the terminal embodiment, with same technical effects achieved. Specifically, FIG. 7 is a schematic diagram of a hardware structure of a terminal for implementing an embodiment of this application.

The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

It can be understood by a person skilled in the art that the terminal 700 may further include a power supply (for example, a battery) supplying power to the components. The power supply may be logically connected to the processor 710 through a power management system, so that functions such as charge and discharge management and power consumption management are implemented through the power management system. The structure of the terminal shown in FIG. 7 does not constitute any limitation on the terminal, and the terminal may include more or fewer components than shown in the figure, some of the components are combined, or a different arrangement of the components is used. Details are not described herein.

It should be understood that in this embodiment of this application, the input unit 704 may include a graphics processing unit (graphics processing unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include a display panel 7061. The display panel 7061 may be configured in a form of a liquid crystal display, an organic light-emitting diode, or the like. The user input unit 707 includes a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (for example, a volume control button or a power on/off button), a trackball, a mouse, and a joystick. Details are not described herein.

In this embodiment of this application, the radio frequency unit 701 transmits downlink data received from a network side device to the processor 710 for processing, and in addition, transmits uplink data to the network side device. Generally, the radio frequency unit 701 includes but is not limited to an antenna, at least one amplifier, a transceiver, a coupler, a low noise amplifier, a duplexer, and the like.

The memory 709 may be configured to store a software program or instructions and various data. The memory 109 may mainly include a program or instruction storage region and a data storage region. The program or instruction storage region may store an operating system, an application program or instructions required for at least one function (for example, a sound play function and a first image play function), and the like. In addition, the memory 709 may include a high-speed random-access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM (EEPROM), or a flash memory, for example, at least one magnetic disk storage device, a flash memory device, or another volatile solid-state storage device.

The processor 710 may include one or more processing units. Optionally, the processor 710 may integrate an application processor and a modem processor. The application processor mainly processes the operating system, a user interface, an application program or instructions, and the like. The modem processor, for example, a baseband processor, mainly processes wireless communication. It may be understood that the modem processor may alternatively not be integrated into the processor 710.

The radio frequency unit 701 is configured to: send assistance information for target data to the network side device; and receive configuration information of the target data from the network side device.

Optionally, the assistance information is used to assist the network side device in configuring the configuration information for the target data. Optionally, the configuration information includes at least one of the following:
first information for allocating and managing an uplink and/or downlink resource;
second information for performing beam management;
third information for performing resource coordination on resources of different terminals served by the network side device;
fourth information for configuring, activating, or deactivating a semi-static resource;
fifth information for updating or reconfiguring a configuration parameter of semi-persistent scheduling SPS or a configured grant CG;
sixth information for discarding, delaying, and/or combining transmission or scheduling of a data packet;
seventh information for assisting the terminal in power saving control; and
eighth information for updating or reconfiguring a discontinuous reception DRX parameter.

Optionally, the assistance information includes at least one of the following:
first indication information, where the first indication information indicates at least one of a protocol data unit PDU session identifier, a quality of service QoS flow identifier, and/or a logical channel identifier that correspond/corresponds to a target service type, a target data frame type, a target data packet, and/or a target data burst, and whether transmitted data is of the target service type, and a data type of the target data;
an association relationship between different data flows or different data bursts of the target data;
a serial number of a group of pictures GOP of the target data;
a to-be-transmitted data amount of the target data;
duration of a data packet of the target data from generation on an application side to transmission through an air interface;
user experience related information corresponding to the target data, where the user experience related information includes a receiving performance of a physical layer data packet and/or a receiving performance of an application layer;
transmission configuration information expected by a user corresponding to the target data;
indication information for activating or deactivating a semi-static resource for the target data;
an index of a QoS flow corresponding to the target data for which the semi-static resource is activated or deactivated;
indication information for reducing a transmission priority of the target data;
an index of a QoS flow corresponding to the target data whose transmission priority is reduced;
indication information for skipping uplink transmission after the target data;
an SPS or configured grant CG transmission cycle recommended by the terminal for the target data;
indication information for reducing a code rate or a resolution of the target data;
configuration information of a DRX configuration for the target data;
power saving indication configuration information of the terminal that performs transmission of the target data;
configuration information of a channel that wakes up transmission of the target data or a signal that wakes up transmission of the target data; and
physical downlink control channel PDCCH monitoring indication configuration information corresponding to the target data.

Optionally, sending, by the radio frequency unit 701, the assistance information for the target data to the network side device includes:
in a case that a preset reporting configuration is satisfied, sending the assistance information for the target data to the network side device, where the preset reporting configuration includes at least one of the following:
a trigger condition corresponding to reporting of the assistance information;
a timer corresponding to reporting of the assistance information; and
an indication about whether reporting of the assistance information is allowed.

Optionally, in the case in which the preset reporting configuration includes the trigger condition corresponding to reporting of the assistance information, that the preset reporting configuration is satisfied includes at least one of the following:
a target transmission unit arrives at a target protocol layer, where the target transmission unit includes at least one of the following: a data frame, a data slice, an application data unit ADU, and an Internet protocol IP packet, and the target protocol layer includes at least one of the following: an application layer, an IP layer, a service data adaptation protocol SADP layer, a packet data convergence protocol PDCP layer, a radio link control RLC layer, a medium access control MAC layer, and a physical layer;
the terminal recognizes a target object, or generates an action or control traffic corresponding to the target object, where the target object includes at least one of a target gesture, a target action, a target pose, and a target object at a preset angle;
a quantity of service flows or a quantity of types of service flows generated by a data source of the target data is greater than a first preset threshold;
in a case that the target data is video service data, a quality evaluation index of a video service corresponding to the video service data changes;
a related parameter of a service corresponding to the target data changes, where the related parameter of the service includes at least one of a data rate of the service, a cycle of the service, frames per second FPS of the service, and a delay of the service;
a data amount of a first data packet is greater than that of a second data packet, and a difference between the data amounts of the first data and the second data packet is greater than or equal to a first preset data amount, where the first data packet and the second data packet are data packets related to the service corresponding to the target data, and the first data packet is received before the second data packet; or
a data amount of a first data packet is less than that of a second data packet, and a difference between the data amounts of the first data and the second data packet is greater than or equal to a second preset data amount, where the first data packet and the second data packet are data packets related to the service corresponding to the target data, and the first data packet is received before the second data packet;
the service corresponding to the target data is a high-priority or high-importance service;
the terminal obtains periodic action or control information;
a variation in channel quality of the terminal is greater than or equal to a third preset threshold, or a variation in interference around the terminal is greater than or equal to a fourth preset threshold;
a variation in a moving speed of the terminal is greater than or equal to a fifth preset threshold;
the terminal does not detect a data flow of a preset service within first preset duration; and
a load of a central processing unit CPU of the terminal is greater than or equal to a preset load, a device temperature is greater than or equal to a preset temperature, a power consumption is greater than or equal to a preset power consumption, remaining power is less than or equal to preset power, or endurance duration is less than or equal to preset threshold duration.

Optionally, that the quality evaluation index of the video service corresponding to the video service data changes includes:
in a case that the quality evaluation index of the video service includes at least two threshold ranges, a target threshold range in which the quality evaluation index of the video service is located changes, where the at least two threshold ranges include the target threshold range;
   or
in a case that the quality evaluation index of the video service includes at least two thresholds, the quality evaluation index of the video service increases to be greater than a target threshold or decreases to be less than a target threshold, where the at least two thresholds include the target threshold. That the terminal sends the assistance information for the target data to the network side device includes:
   the terminal sends, to the network side device, assistance information that corresponds to the target threshold and that is for the target data, where different thresholds correspond to respective assistance information.

Optionally, the timer enters a non-running state when running time reaches second preset duration. The second preset duration is transmission duration corresponding to N symbols, N slots, N subframes, or N system frames. Alternatively, the second preset duration is preset absolute duration. N is a positive integer.

In a case in which the preset reporting configuration includes the timer corresponding to reporting of the assistance information, that the preset reporting configuration is satisfied includes:
the timer is in the non-running state; or
the timer is in a running state.

Optionally, respective timers are configured for reporting of different types of assistance information.

Optionally, that the terminal sends the assistance information for the target data to the network side device, performed by the radio frequency unit 701, includes:
in a case that reporting of the assistance information for the target data is allowed and the terminal has not reported the assistance information for the target data, the radio frequency unit 701 reports the assistance information for the target data for a first time, and the processor 710 is configured to start a first timer; and
in a case that the first timer is in the non-running state and the trigger condition corresponding to reporting of the assistance information for the target data is triggered, the radio frequency unit 701 reports the assistance information for the target data for a second time, and the processor 710 is configured to restart the first timer.

Optionally, that the terminal reports the assistance information for the target data for the second time, performed by the radio frequency unit 701, includes:
reporting the assistance information for the target data at least once during the running state of the first timer;
   or
measuring and/or collecting the assistance information for the target data within a first time period during the running state of the first timer; and
reporting the measured and/or collected assistance information for the target data at an end of the first time period, where the first time period is a continuous period of time or a discontinuous period of time that is determined based on a predetermined rule.

Optionally, the terminal pre-stores the preset reporting configuration;
or
before the terminal sends the assistance information for the target data to the network side device, the radio frequency unit 701 is further configured to:
receive pre-configuration information from the network side device, where the pre-configuration information is used to configure the preset reporting configuration; or
receive second indication information from the network side device, where the second indication information indicates the preset reporting configuration.

Optionally, the radio frequency unit 701 is further configured to: send capability information to the network side device; and receive configuration information of the preset reporting configuration from the network side device, where the preset reporting configuration corresponds to the capability information, and terminals with different capability information correspond to respective preset reporting configurations.

Optionally, the capability information includes at least one of the following:
a service type supported by the terminal;
a terminal type of the terminal; and
a tethering mode supported by the terminal.

Optionally, different service flows correspond to respective assistance information; and/or
different frequency ranges correspond to respective assistance information; and/or
different cell groups CG correspond to respective assistance information; and/or
different bandwidth parts BWP correspond to respective assistance information; and/or
different cells correspond to respective assistance information; and/or
different carriers correspond to respective assistance information.

Optionally, the assistance information is carried in uplink control information UCI, a medium access control-control element MAC CE, radio resource control RRC signaling, a physical uplink shared channel PUSCH, a buffer status report BSR, or a scheduling request SR.

The terminal 700 provided in this embodiment of this application can implement the steps performed by the terminal in the method embodiment shown in FIG. 2, with same beneficial effects achieved. To avoid repetition, details are not described herein again.

An embodiment of this application further provides a network side device, including a processor and a communication interface. The communication interface is configured to receive XR related assistance information from a terminal. The processor is configured to perform target service configuration based on the XR related assistance information. The network side device embodiment corresponds to the method embodiment for the network side device. Implementation processes and implementations of the method embodiment are applicable to the network side device embodiment, with same technical effects achieved.

Specifically, an embodiment of this application further provides a network side device. As shown in FIG. 8, a network side device 800 includes an antenna 801, a radio frequency apparatus 802, and a baseband apparatus 803. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out through the antenna 801.

The frequency band processing apparatus may be located in the baseband apparatus 803. The method performed by the network side device in the foregoing embodiment may be implemented by the baseband apparatus 803. The baseband apparatus 803 includes a processor 804 and a memory 805.

The baseband apparatus 803 may include, for example, at least one baseband processing unit. A plurality of chips are disposed on the baseband processing unit. As shown in FIG. 8, one of the chips is, for example, the processor 804, connected to the memory 805, to invoke a program in the memory 805 to perform the operation of the network side device shown in the method embodiment.

The baseband apparatus 803 may further include a network interface 806, configured to exchange information with the radio frequency apparatus 802. The interface is, for example, a common public radio interface (common public radio interface, CPRI).

Specifically, the network side device in this embodiment of the present invention further includes: instructions or a program stored in the memory 805 and runnable on the processor 804. The processor 804 invokes the instructions or program in the memory 805 to perform the method performed by the modules shown in FIG. 3, with same technical effects achieved. To avoid repetition, details are not described herein again.

An embodiment of this application further provides a readable storage medium. The readable storage medium stores a program or instructions. When the program or instructions are executed by a processor, the processes of the method embodiment shown in FIG. 2 or FIG. 3 are implemented, with same technical effects achieved. To avoid repetition, details are not described herein again.

The processor is the processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes of the method embodiment shown in FIG. 2 or FIG. 3, with same technical effects achieved. To avoid repetition, details are not described herein again.

It should be understood that the chip in this embodiment of this application may also be referred to as a system-level chip, a system chip, a chip system, a system on chip, or the like.

An embodiment of this application further provides a computer program product. The computer program product is stored in a non-volatile storage medium. The computer program product is executed by at least one processor to implement the processes of the method embodiment, with same technical effects achieved. To avoid repetition, details are not described herein again.

It should be noted that in this specification, the terms "comprise" and "include" or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element defined by "includes a ..." does not preclude existence of other identical elements in a process, method, article, or apparatus that includes the element. In addition, it should be noted that the scope of the methods and apparatuses in embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing implementations, a person skilled in the art can clearly understand that the method in the foregoing embodiments may be implemented by software in addition to a necessary universal hardware platform or by hardware only. In most cases, the former is a more preferred implementation. Based on such an understanding, the technical solutions of this application essentially, or the part contributing to the conventional technology may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in embodiments of this application.

The foregoing describes embodiments of this application with reference to the accompanying drawings. However, this application is not limited to these specific embodiments. The specific embodiments are merely illustrative rather than restrictive. Inspired by this application, a person of ordinary skill in the art may develop many other manners without departing from the principle of this application and the protection scope of the claims, and all such manners fall within the protection scope of this application.

## Claims

1. An assistance information reporting method, comprising:
sending, by a terminal, assistance information for target data to a network side device; and
receiving, by the terminal, configuration information of the target data from the network side device.

2. The method according to claim 1, wherein the assistance information is used to assist the network side device in configuring the configuration information for the target data.

3. The method according to claim 1, wherein the configuration information comprises at least one of the following:
first information for allocating and managing an uplink and/or downlink resource;
second information for performing beam management;
third information for performing resource coordination on resources of different terminals served by the network side device;
fourth information for configuring, activating, or deactivating a semi-static resource;
fifth information for updating or reconfiguring a configuration parameter of semi-persistent scheduling SPS or a configured grant CG;
sixth information for discarding, delaying, and/or combining a transmission or scheduling of a data packet;
seventh information for assisting the terminal in power saving control; and
eighth information for updating or reconfiguring a discontinuous reception DRX parameter.

4. The method according to any one of claims 1 to 3, wherein the assistance information comprises at least one of the following:
first indication information, wherein the first indication information indicates at least one of a protocol data unit PDU session identifier, a quality of service QoS flow identifier, and/or a logical channel identifier that correspond/corresponds to a target service type, a target data frame type, a target data packet, and/or a target data burst, and whether transmitted data is of the target service type, and a data type of the target data;
an association relationship between different data flows or different data bursts of the target data;
a serial number of a group of pictures GOP of the target data;
a to-be-transmitted data amount of the target data;
duration of a data packet of the target data from generation on an application side to transmission through an air interface;
user experience related information corresponding to the target data, wherein the user experience related information comprises a receiving performance of a physical layer data packet and/or a receiving performance of an application layer;
transmission configuration information expected by a user corresponding to the target data;
indication information for activating or deactivating a semi-static resource for the target data;
an index of a QoS flow corresponding to the target data for which the semi-static resource is activated or deactivated;
indication information for reducing a transmission priority of the target data;
an index of a QoS flow corresponding to the target data whose transmission priority is reduced;
indication information for skipping uplink transmission after the target data;
an SPS or configured grant CG transmission cycle recommended by the terminal for the target data;
indication information for reducing a code rate or a resolution of the target data;
configuration information of a DRX configuration for the target data;
power saving indication configuration information of the terminal that performs transmission of the target data;
configuration information of a channel that wakes up transmission of the target data or a signal that wakes up transmission of the target data; and
physical downlink control channel PDCCH monitoring indication configuration information corresponding to the target data.

5. The method according to claim 1, wherein the sending, by a terminal, assistance information for target data to a network side device comprises:
in a case that a preset reporting configuration is satisfied, sending, by the terminal, the assistance information for the target data to the network side device, wherein the preset reporting configuration comprises at least one of the following:
a trigger condition corresponding to reporting of the assistance information;
a timer corresponding to reporting of the assistance information; and
an indication about whether reporting of the assistance information is allowed.

6. The method according to claim 5, wherein in a case that the preset reporting configuration comprises the trigger condition corresponding to reporting of the assistance information, that the preset reporting configuration is satisfied comprises at least one of the following:
a target transmission unit arrives at a target protocol layer, wherein the target transmission unit comprises at least one of the following: a data frame, a data slice, an application data unit ADU, and an Internet protocol IP packet, and the target protocol layer comprises at least one of the following: an application layer, an IP layer, a service data adaptation protocol SADP layer, a packet data convergence protocol PDCP layer, a radio link control RLC layer, a medium access control MAC layer, and a physical layer;
the terminal recognizes a target object, or generates an action or control traffic corresponding to a target object, wherein the target object comprises: at least one of a target gesture, a target action, a target pose, and a target object at a preset angle;
a quantity of service flows or a quantity of types of service flows generated by a data source of the target data is greater than a first preset threshold;
in a case that the target data is video service data, a quality evaluation index of a video service corresponding to the video service data changes;
a related parameter of a service corresponding to the target data changes, wherein the related parameter of the service comprises at least one of a data rate of the service, a cycle of the service, frames per second FPS of the service, and a delay of the service;
a data amount of a first data packet is greater than that of a second data packet, and a difference between the data amounts of the first data packet and the second data packet is greater than or equal to a first preset data amount, wherein the first data packet and the second data packet are data packets related to the service corresponding to the target data, and the first data packet is received before the second data packet; or
a data amount of a first data packet is less than that of a second data packet, and a difference between the data amounts of the first data and the second data packet is greater than or equal to a second preset data amount, wherein the first data packet and the second data packet are data packets related to the service corresponding to the target data, and the first data packet is received before the second data packet;
the service corresponding to the target data is a high-priority or high-importance service;
the terminal obtains periodic action or control information;
a variation in channel quality of the terminal is greater than or equal to a third preset threshold, or a variation in interference around the terminal is greater than or equal to a fourth preset threshold;
a variation in a moving speed of the terminal is greater than or equal to a fifth preset threshold;
the terminal does not detect a data flow of a preset service within first preset duration; and
a load of a central processing unit CPU of the terminal is greater than or equal to a preset load, a device temperature is greater than or equal to a preset temperature, a power consumption is greater than or equal to a preset power consumption, remaining power is less than or equal to preset power, or endurance duration is less than or equal to preset threshold duration.

7. The method according to claim 6, wherein the quality evaluation index of the video service corresponding to the video service data changes comprises:
in a case that the quality evaluation index of the video service comprises at least two threshold ranges, a target threshold range in which the quality evaluation index of the video service is located changes, wherein the at least two threshold ranges comprise the target threshold range;
or
in a case that the quality evaluation index of the video service comprises at least two thresholds, the quality evaluation index of the video service increases to be greater than a target threshold or decreases to be less than a target threshold, wherein the at least two thresholds comprise the target threshold; and the sending, by a terminal, assistance information for target data to a network side device comprises:
sending, by the terminal to the network side device, assistance information that corresponds to the target threshold and that is for the target data, wherein different thresholds correspond to respective assistance information.

8. The method according to claim 5, wherein the timer enters a non-running state in a case that running time reaches second preset duration, the second preset duration is transmission duration corresponding to N symbols, N slots, N subframes, or N system frames, or the second preset duration is preset absolute duration, and N is a positive integer; and
in a case that the preset reporting configuration comprises the timer corresponding to reporting of the assistance information, that the preset reporting configuration is satisfied comprises:
the timer is in the non-running state; or
the timer is in a running state.

9. The method according to claim 8, wherein respective timers are configured for reporting of different types of assistance information.

10. The method according to any one of claims 5 to 9, wherein the sending, by a terminal, assistance information for target data to a network side device comprises:
in a case that reporting of the assistance information for the target data is allowed and the terminal has not reported the assistance information for the target data, reporting, by the terminal, the assistance information for the target data for a first time, and starting a first timer; and
in a case that the first timer is in the non-running state and the trigger condition corresponding to reporting of the assistance information for the target data is triggered, reporting, by the terminal, the assistance information for the target data for a second time, and restarting the first timer.

11. The method according to claim 10, wherein the reporting, by the terminal, the assistance information for the target data for a second time comprises:
reporting the assistance information for the target data at least once during the running state of the first timer;
or
measuring and/or collecting the assistance information for the target data within a first time period during the running state of the first timer; and
reporting the measured and/or collected assistance information for the target data at an end of the first time period, wherein the first time period is a continuous period of time or a discontinuous period of time that is determined based on a predetermined rule.

12. The method according to claim 5, wherein the terminal pre-stores the preset reporting configuration;
or
before the sending, by a terminal, assistance information for target data to a network side device, the method further comprises:
receiving, by the terminal, pre-configuration information from the network side device, wherein the pre-configuration information is used to configure the preset reporting configuration; or
receiving, by the terminal, second indication information from the network side device, wherein the second indication information indicates the preset reporting configuration.

13. The method according to claim 5, wherein the method further comprises:
sending, by the terminal, capability information to the network side device; and
receiving, by the terminal, configuration information of the preset reporting configuration from the network side device, wherein the preset reporting configuration corresponds to the capability information, and terminals with different capability information correspond to respective preset reporting configurations.

14. The method according to claim 13, wherein the capability information comprises at least one of the following:
a service type supported by the terminal;
a terminal type of the terminal; and
a tethering mode supported by the terminal.

15. The method according to claim 1, wherein
different service flows correspond to respective assistance information;different frequency ranges correspond to respective assistance information;
different cell groups CG correspond to respective assistance information;
different bandwidth parts BWP correspond to respective assistance information;
different cells correspond to respective assistance information; and/or
different carriers correspond to respective assistance information.

16. The method according to claim 1, wherein the assistance information is carried in at least of uplink control information UCI, a medium access control-control element MAC CE, radio resource control RRC signaling, a physical uplink shared channel PUSCH, a buffer status report BSR, or a scheduling request SR.

17. An assistance information reporting apparatus, comprising:
a first sending module, configured to send assistance information for target data to a network side device; and
a first receiving module, configured to receive configuration information of the target data from the network side device.

18. The apparatus according to claim 17, wherein the assistance information is used to assist the network side device in configuring the configuration information for the target data.

19. The apparatus according to claim 17, wherein the configuration information comprises at least one of the following:
first information for allocating and managing an uplink and/or downlink resource;
second information for performing beam management;
third information for performing resource coordination on resources of different terminals served by the network side device;
fourth information for configuring, activating, or deactivating a semi-static resource;
fifth information for updating or reconfiguring a configuration parameter of SPS or a configured grant CG;
sixth information for discarding, delaying, and/or combining transmission or scheduling of a data packet;
seventh information for assisting a terminal in power saving control; and
eighth information for updating or reconfiguring a discontinuous reception DRX parameter.

20. The apparatus according to any one of claims 17 to 19, wherein the assistance information comprises at least one of the following:
first indication information, wherein the first indication information indicates at least one of a protocol data unit PDU session identifier, a quality of service QoS flow identifier, and/or a logical channel identifier that correspond/corresponds to a target service type, a target data frame type, a target data packet, and/or a target data burst, and whether transmitted data is of the target service type, and a data type of the target data;
an association relationship between different data flows or different data bursts of the target data;
a serial number of a group of pictures GOP of the target data;
a to-be-transmitted data amount of the target data;
duration of a data packet of the target data from generation on an application side to transmission through an air interface;
user experience related information corresponding to the target data, wherein the user experience related information comprises a receiving performance of a physical layer data packet and/or a receiving performance of an application layer;
transmission configuration information expected by a user corresponding to the target data;
indication information for activating or deactivating a semi-static resource for the target data;
an index of a QoS flow corresponding to the target data for which the semi-static resource is activated or deactivated;
indication information for reducing a transmission priority of the target data;
an index of a QoS flow corresponding to the target data whose transmission priority is reduced;
indication information for skipping uplink transmission after the target data;
an SPS or configured grant CG transmission cycle recommended by the terminal for the target data;
indication information for reducing a code rate or a resolution of the target data;
configuration information of a DRX configuration for the target data;
power saving indication configuration information of the terminal that performs transmission of the target data;
configuration information of a channel that wakes up transmission of the target data or a signal that wakes up transmission of the target data; and
physical downlink control channel PDCCH monitoring indication configuration information corresponding to the target data.

21. The apparatus according to claim 17, wherein the first sending module is specifically configured to:
in a case that a preset reporting configuration is satisfied, send the assistance information for the target data to the network side device, wherein the preset reporting configuration comprises at least one of the following:
a trigger condition corresponding to reporting of the assistance information;
a timer corresponding to reporting of the assistance information; and
an indication about whether reporting of the assistance information is allowed.

22. The apparatus according to claim 21, further comprising:
a second sending module, configured to send capability information to the network side device; and
a second receiving module, configured to receive configuration information of the preset reporting configuration from the network side device, wherein the preset reporting configuration corresponds to the capability information, and terminals with different capability information correspond to respective preset reporting configurations.

23. A service configuration method, comprising:
receiving, by a network side device, assistance information for target data from a terminal;
determining, by the network side device, configuration information of the target data based on the assistance information; and
sending, by the network side device, the configuration information of the target data to the terminal.

24. The method according to claim 23, wherein the configuration information comprises at least one of the following:
first information for allocating and managing an uplink and/or downlink resource;
second information for performing beam management;
third information for performing resource coordination on resources of different terminals served by the network side device;
fourth information for configuring, activating, or deactivating a semi-static resource;
fifth information for updating or reconfiguring a configuration parameter of semi-persistent scheduling SPS or a configured grant CG;
sixth information for discarding, delaying, and/or combining transmission or scheduling of a data packet;
seventh information for assisting the terminal in power saving control; and
eighth information for updating or reconfiguring a discontinuous reception DRX parameter.

25. The method according to claim 23 or 24, wherein the assistance information comprises at least one of the following:
first indication information, wherein the first indication information indicates at least one of a protocol data unit PDU session identifier, a quality of service QoS flow identifier, and/or a logical channel identifier that correspond/corresponds to a target service type, a target data frame type, a target data packet, and/or a target data burst, and whether transmitted data is of the target service type, and a data type of the target data;
an association relationship between different data flows or different data bursts of the target data;
a serial number of a group of pictures GOP of the target data;
a to-be-transmitted data amount of the target data;
duration of a data packet of the target data from generation on an application side to transmission through an air interface;
user experience related information corresponding to the target data, wherein the user experience related information comprises a receiving performance of a physical layer data packet and/or a receiving performance of an application layer;
transmission configuration information expected by a user corresponding to the target data;
indication information for activating or deactivating a semi-static resource for the target data;
an index of a QoS flow corresponding to the target data for which the semi-static resource is activated or deactivated;
indication information for reducing a transmission priority of the target data;
an index of a QoS flow corresponding to the target data whose transmission priority is reduced;
indication information for skipping uplink transmission after the target data;
an SPS or configured grant CG transmission cycle recommended by the terminal for the target data;
indication information for reducing a code rate or a resolution of the target data;
configuration information of a DRX configuration for the target data;
power saving indication configuration information of the terminal that performs transmission of the target data;
configuration information of a channel that wakes up transmission of the target data or a signal that wakes up transmission of the target data; and
physical downlink control channel PDCCH monitoring indication configuration information corresponding to the target data.

26. The method according to claim 25, wherein the method further comprises:
sending, by the network side device, configuration information of a preset reporting configuration to the terminal.

27. The method according to claim 26, wherein before the sending, by the network side device, configuration information of a preset reporting configuration to the terminal, the method further comprises:
receiving, by the network side device, capability information from the terminal, wherein
the preset reporting configuration corresponds to the capability information, and terminals with different capability information correspond to respective preset reporting configurations.

28. The method according to claim 27, wherein the capability information comprises at least one of the following:
a service type supported by the terminal;
a terminal type of the terminal; and
a tethering mode supported by the terminal.

29. The method according to claim 23, wherein
different service flows correspond to respective assistance information;
different frequency ranges correspond to respective assistance information;
different cell groups CG correspond to respective assistance information;
different bandwidth parts BWP correspond to respective assistance information;
different cells correspond to respective assistance information; and/or
different carriers correspond to respective assistance information.

30. The method according to claim 23, wherein the assistance information is carried in uplink control information UCI, a medium access control-control element MAC CE, radio resource control RRC signaling, a physical uplink shared channel PUSCH, a buffer status report BSR, or a scheduling request SR.

31. A service configuration apparatus, comprising:
a third receiving module, configured to receive assistance information for target data from a terminal;
a determining module, configured to determine configuration information of the target data based on the assistance information; and
a third sending module, configured to send the configuration information of the target data to the terminal.

32. The apparatus according to claim 31, wherein the configuration information comprises at least one of the following:
first information for allocating and managing an uplink and/or downlink resource;
second information for performing beam management;
third information for performing resource coordination on resources of different terminals served by a network side device;
fourth information for configuring, activating, or deactivating a semi-static resource;
fifth information for updating or reconfiguring a configuration parameter of semi-persistent scheduling SPS or a configured grant CG;
sixth information for discarding, delaying, and/or combining transmission or scheduling of a data packet;
seventh information for assisting the terminal in power saving control; and
eighth information for updating or reconfiguring a discontinuous reception DRX parameter.

33. The apparatus according to claim 31 or 32, wherein the assistance information comprises at least one of the following:
first indication information, wherein the first indication information indicates at least one of a protocol data unit PDU session identifier, a quality of service QoS flow identifier, and/or a logical channel identifier that correspond/corresponds to a target service type, a target data frame type, a target data packet, and/or a target data burst, and whether transmitted data is of the target service type, and a data type of the target data;
an association relationship between different data flows or different data bursts of the target data;
a serial number of a group of pictures GOP of the target data;
a to-be-transmitted data amount of the target data;
duration of a data packet of the target data from generation on an application side to transmission through an air interface;
user experience related information corresponding to the target data, wherein the user experience related information comprises a receiving performance of a physical layer data packet and/or a receiving performance of an application layer;
transmission configuration information expected by a user corresponding to the target data;
indication information for activating or deactivating a semi-static resource for the target data;
an index of a QoS flow corresponding to the target data for which the semi-static resource is activated or deactivated;
indication information for reducing a transmission priority of the target data;
an index of a QoS flow corresponding to the target data whose transmission priority is reduced;
indication information for skipping uplink transmission after the target data;
an SPS or configured grant CG transmission cycle recommended by the terminal for the target data;
indication information for reducing a code rate or a resolution of the target data;
configuration information of a DRX configuration for the target data;
power saving indication configuration information of the terminal that performs transmission of the target data;
configuration information of a channel that wakes up transmission of the target data or a signal that wakes up transmission of the target data; and
physical downlink control channel PDCCH monitoring indication configuration information corresponding to the target data.

34. The apparatus according to claim 33, further comprising:
a fourth sending module, configured to send configuration information of a preset reporting configuration to the terminal.

35. The apparatus according to claim 34, further comprising:
a fourth receiving module, configured to receive capability information from the terminal, wherein
the preset reporting configuration corresponds to the capability information, and terminals with different capability information correspond to respective preset reporting configurations.

36. A terminal, comprising a processor, a memory, and a program or instructions stored in the memory and executable on the processor, wherein in a case that the program or instructions are executed by the processor, the steps of the assistance information reporting method according to any one of claims 1 to 16 are implemented.

37. A network side device, comprising a processor, a memory, and a program or instructions stored in the memory and executable on the processor, wherein in a case that the program or instructions are executed by the processor, the steps of the service configuration method according to any one of claims 23 to 30 are implemented.

38. A readable storage medium, wherein the readable storage medium stores a program or instructions, and in a case that the program or instructions are executed by a processor, the steps of the assistance information reporting method according to any one of claims 1 to 16 or the service configuration method according to any one of claims 23 to 30 are implemented.
